# EUROPEAN PATENT SPECIFICATION

(11) **EP 2 613 492 B1**
(45) Date of publication and mention of the grant of the patent: **29.07.2015**
(21) Application number: 11828084.1
(22) Date of filing: 23.09.2011
(51) Int. Cl.: H04L 29/08, G06F 21/62, H04L 29/06

(54) **METHOD AND DEVICE FOR APPLYING PARENTAL CONTROL IN DYNAMIC HTTP STREAMING**
VERFAHREN UND VORRICHTUNG ZUR EINRICHTUNG EINER KINDERSICHERUNG FÜR EIN DYNAMISCHES HTTP-STREAMING
PROCÉDÉ ET DISPOSITIF POUR L'APPLICATION D'UN CONTRÔLE PARENTAL DANS LA DIFFUSION EN MODE CONTINU DE FLUX HTTP DYNAMIQUE

(30) Priority: 30.09.2010 CN 201010506027
(43) Date of publication of application: 10.07.2013
(73) Proprietor: Huawei Technologies Co., Ltd., Longgang District Shenzhen, Guangdong 518129 (CN)
(72) Inventor: YUAN, Weizhong, Shenzhen Guangdong 518129 (CN); ZHANG, Chuxiong, Shenzhen Guangdong 518129 (CN); SHI, Teng, Shenzhen Guangdong 518129 (CN); YUE, Peiyu, Shenzhen Guangdong 518129 (CN); ZHANG, Yuanyuan, Shenzhen Guangdong 518129 (CN); TIAN, Yonghui, Shenzhen Guangdong 518129 (CN); HUI, Yu, Shenzhen Guangdong 518129 (CN); ZHANG, Renzhou, Shenzhen Guangdong 518129 (CN); WU, Lingyan, Shenzhen Guangdong 518129 (CN)
(74) Representative: Kreuz, Georg Maria
(86) International application number: PCT/CN2011/080079
(87) International publication number: WO 2012/041188

(56) References cited:
- CN-A- 1 606 009
- CN-A- 101 833 617
- CN-A- 102 148 851
- US-A- 6 115 057
- US-A1- 2006 130 119
- US-A1- 2007 204 288

## Description

### FIELD OF THE INVENTION

The present invention relates the field of communications technologies, and in particular, to a method and device for applying parental control in adaptive HTTP streaming transmission.

### BACKGROUND OF THE INVENTION

The HTTP progressive download is an improvement to manners for downloading HTTP files, and can make a terminal device play a media file while downloading it instead of playing the whole file after the download is complete, so that the play start-up delay is not long. The implementation principle is that media contents are segmented, and a (/a group of) media segment can be decoded independently on the terminal device without relying on other previous or following media segments. In this way, after receiving each media segment, the terminal device may decode and play the media segment, and may also receive a next (/a next group of) media segment at the same time. In this manner, the processing granularity of a media file is adjusted from a whole file into each media segment and the typical play duration of a media segment is several seconds, for example, 1 to 10 seconds.

However, the HTTP progressive download technology cannot bring as good experience as conventional streaming media for users, which is because of: (1) nonsupport of the dynamic adaptive switch between different bit rates : during playing, thanks to the network bandwidth jitter, practical available bandwidth may be less than the bit rates of the playback rate of the media content, which results in that terminal device needs to buffer and wait; and (2) insufficient support of playback control operations: for the already downloaded part of the content, the progressive download may support operations such as backward dragging, while for the part of the content that is not downloaded, the progressive download does not support operations such as fast forward (Fast Forward) and rewinding. However, many users have got used to fast forwarding or forward dragging the parts in which the users are not interested, and reversely dragging the parts in which the users are interested for watching again.

Therefore, based on the HTTP progressive download, an enhanced manner for streaming media transmission, which is based on an HTTP protocol and is called an HTTP streaming (HTTP Streaming) transmission technology, is developed. The technology supports dynamic bit rate adaptation, that is, in the playing process, a media segment with a proper bit rate can be dynamically selected and switched according to the available network bandwidth (Bandwidth) between a client and a server in real time manner, so as to provide good user experience as much as possible. Therefore, the technology is also called HTTP adaptive streaming (HTTP Adaptive Streaming, HAS), adaptive HTTP streaming (Adaptive HTTP Streaming).

The adaptive HTTP streaming transmission technology is used to transmit multimedia contents, including such kind of media contents as film programs and television programs. The adaptive HTTP streaming transmission technology may also be applied for a set top box (STB) to transmit television programs to a television set in the near future. These film and television programs may include content segment about the dark side of the society, such as violence, bloodiness, drugs, and pornography. Frequent occurrence of such content segment may lead to emergence of a series of social problems. Especially it will have the bad effect on those children and teenagers who are not mentally mature and are weak in judgment. To protect the children and teenagers from being affected by negative film and television materials, many developed countries and regions have already established relevant laws of films and film rating systems and television rating systems. Though specific rules of different countries may vary to some extent, the original intention of the film rating systems is to protect underage children and teenagers. A rating system refers to that an organization rates, according to a certain rule, products of studios into several ratings in light of the contents, and specifies targeted audiences for each rating. In theory, rating films can meet the needs of audiences at different ages and different levels. Generally, a higher restricted rating contains more restrictive scenes, and as a result, a minimum age required for watching is also raised.

In the prior art, a parental control rating of a program is placed inside description information (EPG or ESG) of the program on a head end, for example, when in normalization of description of metadata made by the ETSI TS 102 822-3-1 V1.3.1 "TV-Anytime", parental control information "ParentalGuidance" defined by the MPEG-7 is included in basic content description information (BasicContentDescriptionType). In addition, in the Electronic Service Guide (ESG, Electronic Service Guide) of Digital Video Broadcasting-Convergence of Broadcast and Mobile Services (DVB-CBMS, Digital Video Broadcasting-Convergence of Broadcast and Mobile Services), parental control information may be included in the Service (similar to a television channel), Content (similar to a television program), and Service Bundle (pack of several television channels), and the type is still the parental control information "ParentalGuidance" defined by the MPEG-7. A terminal such as a set top box (STB, Set Top Box) parses the EPG/ESG to obtain the parental control information while accessing a program according to the EPG/ESG, so as to implement a parental control function. A general implementation procedure is that: the terminal performs corresponding age setting by enabling a parental control function in a settings menu; and then the set top box decides whether to restrict normal watching of a channel (or a program) by comparing corresponding age control information in the channel (or the program) while receiving the EPG/ESG; when the age control information in the channel (or the program) exceeds an age set by the terminal, the restriction only can be removed by entering a password, where the EPG can only provide parental control rating information of a channel, a program content, or a channel packet, that is, the minimum granularity of a parental control rating can only be at a program level.

US 2006/130119 discloses replacing scenes of objectionable content based on the determination of the scene of the program includes objectionable content.

### SUMMARY OF THE INVENTION

The present invention provides a method and device for applying parental control in adaptive HTTP streaming transmission, so as to solve a problem of inaccuracy of parental control in the prior art.

According to the first aspect of the present invention a method for applying parental control in an adaptive HTTP streaming transmission technology includes: setting corresponding parental control rating information for media contents in different time periods in a single media presentation; sending the parental control rating information to a client, where, the parental control rating information is comprised in a media presentation description, MPD, so that the client processes the media contents in the single media presentation according to the parental control rating information;
wherein, the step of setting the corresponding parental control rating information for the media contents in the different time periods in the single media presentation comprises: for the single media presentation composed by multiple different media components, setting corresponding parental control rating information for each of the different media components in a same time period.

According to the second aspect of the present invention, method for applying parental control in an adaptive HTTP streaming transmission technology includes: receiving parental control rating information sent by a server, wherein the parental control rating information is parental control rating information corresponding to media contents in different time periods in a single media presentation and the parental control rating information is comprised in a media presentation description, MPD; and for the single media presentation composed by multiple different media components, the parental control rating information is set for each of the different media components in a same time period; and

processing, according to the parental control rating information comprised in the MPD, the media contents in the single media presentation.

According to the third aspect of the present invention a device for applying parental control in media includes: a setting unit, configured to set corresponding parental control rating information for media contents in different time periods in a single media presentation; and a processing unit, configured to send the parental control rating information to a client, wherein the parental control rating information is comprised in a media presentation description, MPD,; so that the client processes, according to the parental control rating information and a handle mode, the media contents in the single media presentation; wherein, the setting the corresponding parental control rating information for the media contents in the different time periods in the single media presentation comprises: for a media presentation composed by multiple different media components, setting corresponding parental control rating information for each of the different media components in a same time period.

According to a fourth aspect of the present invention a client is provided, where the client includes: a receiving unit, configured to receive parental control rating information sent by a server, where the parental control rating information is parental control rating information corresponding to media contents in different time periods in a single media presentation; the parental control rating information is comprised in a media presentation description, MPD; and for the single media presentation composed by multiple different media components, the parental control rating information is set for each of the different media components in a same time period; and a processing unit, configured to process, according to the parental control rating information, the media contents in the single media presentation.

In the present invention the corresponding parental control rating information is set for the media contents in the different time periods in the single media presentation; the parental control rating information is sent to the client; and the client processes, according to the parental control rating information, the media contents in the single media presentation, to make the effect of parental control accurate.

### BRIEF DESCRIPTION OF THE DRAWINGS

FIG. 1 is a flow chart of a method for applying parental control in media according to an embodiment of the present invention;
FIG. 2 is a flow chart of a method for applying parental control in media according to an embodiment of the present invention;
FIG. 3 is a basic block diagram of a device for applying parental control in media according to an embodiment of the present invention;
FIG. 4 is a basic block diagram of a client according to an embodiment of the present invention;
FIG. 5 is a specific implementation flow chart of a method for applying parental control in media according to an embodiment of the present invention;
FIG. 6 is a flow chart of processing parental control rating information according to an embodiment of the present invention;
FIG. 7 is a specific implementation flow chart of a method for applying parental control in media according to an embodiment of the present invention;
FIG. 8 is a flow chart of processing parental control rating information according to an embodiment of the present invention;
FIG. 9 is a flow chart of authenticating parental control rating information according to an embodiment of the present invention;
FIG. 10 is a specific implementation flow chart of a method for applying parental control in media according to an embodiment of the present invention;
FIG. 11 is a flow chart of processing parental control rating information according to an embodiment of the present invention;
FIG. 12 is a specific implementation flow chart of a method for applying parental control in media according to an embodiment of the present invention;
FIG. 13 is a flow chart of processing parental control rating information according to an embodiment of the present invention;
FIG. 14 is a specific implementation flow chart of a method for applying parental control in media according to an embodiment of the present invention;
FIG. 15 is a flow chart of processing parental control rating information according to an embodiment of the present invention; and
FIG. 16 is a flow chart of media segment (including parental control rating information) processing according to an embodiment of the present invention.

### DETAILED DESCRIPTION OF THE EMBODIMENTS

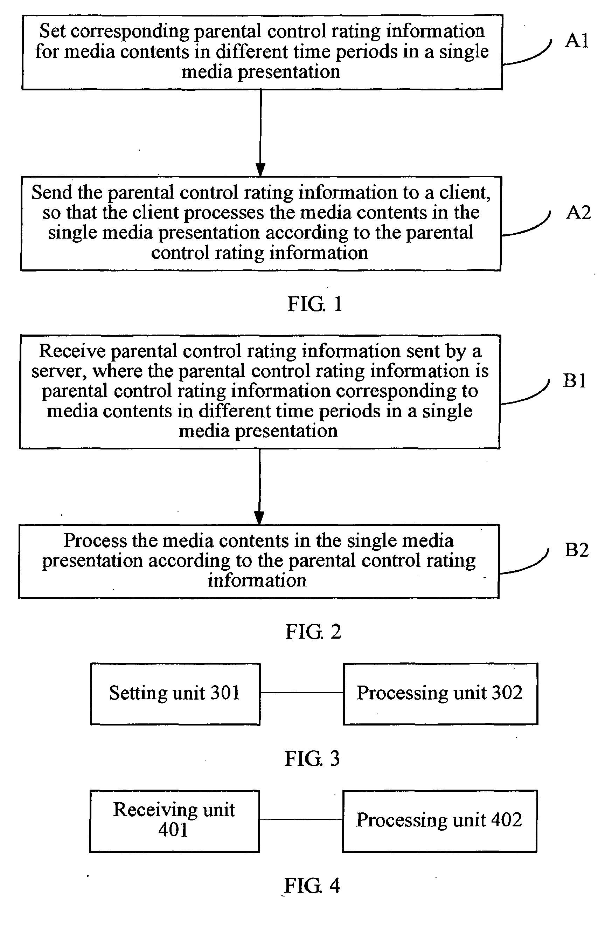

Referring to FIG. 1, an embodiment of the present invention provides a method for applying parental control in media, where the method includes:
A1: Set corresponding parental control rating information for media contents in different time periods in a single media presentation.

The single media presentation here refers to as a channel, a single program, or a package of channels. The parental control rating information includes a time period, and a rating of a media content corresponding to the time period, where the rating system here is pre-defined and usually is standardized. For example, in light of rating system defined by the Motion Picture Association of America, for an one hour film, if, for example, violent scene appears from the 20th minute to the 23rd minute, then the parental control rating of this time period is set as special counseling rating; if pornographic scene appears from the 35th minute to the 39th minute, then the parental control rating of this time period is set as a restricted rating. The parental control rating information is carried in media presentation description information (Media Presentation Description, MPD) or media segments by a server side. The parental control rating corresponding to a media content may be marked in a hierarchical manner. The parental control rating information is summarized into the following categories:
(1) Default parental control rating, which is carried in the MPD level and default to the whole media presentation. For example, a default parental control rating of the media content may include a general audiences rating; a type of a parental control rating system, such as the Motion Picture Association of America rating, and an applicable country code/region code, such as country code US and the region code optional; and
(2) other parental control rating which is different from the default parental control rating. To be specific, other parental control rating information includes a certain parental control rating and time period information corresponding to the certain parental control rating. Here the time period information may be enumeration of time ranges. Period corresponds to a time period and a range of media segments, to be specific to a specific media segment and a corresponding parental control rating. For example, if parental control rating of media segments (numbers 25-28) is signaled as a special counseling rating, and a default parental control rating is a general audiences rating, then the parental control rating of the media content corresponding to the media segments whose numbers are 25-28 is the special counseling rating, and the parental control rating of the media content corresponding to other media segments is the general audiences rating.

Optionally, a handle mode of a client may be further carried in the MPD or a media segment, where the handle mode may include:
a handle mode that may be adopted by the client when a parental control rating exceeds a set highest rating or a highest rating of a user, where the handle mode may take enumerated values, such as, authentication, skip, and client policy first, and if the handle mode is authentication, a URL address of a remote authentication server of a third party may be further included.

Because a media content may be divided into a video content and an audio content, different parental control ratings can also be set for a video content, an audio content, a caption content, and the like in a same time period.

A2: Send the parental control rating information to a client, so that the client processes the media contents in the single media presentation according to the parental control rating information.

After receiving the parental control rating information, according to the parental control rating information, the client performs corresponding parental control during watching in light of a set highest rating or a highest rating of a user for watching. If the set highest rating or the highest rating of a user for watching is greater than or equal to a rating of a media content, the media content can be directly watched; otherwise, if a handle mode of the client is provided, corresponding processing needs to be performed in light of the handle mode of the client. For example, if the handle mode is indicated as authentication, the client needs to perform corresponding authentication, and the media content can be continuously watched only after the authentication succeeds, that is to say, the media content cannot be continuously watched if the authentication fails; if the handle mode is indicated as skip, the media content portion of a corresponding rating is directly skipped; if the handle mode is indicated as client policy first, a policy of the parental control set by the client prevails; and if the handle mode of the client is not provided, processing is performed in light of a local policy of the client, for example, the parental control is not applied, a highest rating allowed for watching is set, or a media content that exceeds the allowed highest rating is skipped (directly filtered out).

In this embodiment, the corresponding parental control rating information is set for the media contents in the different time periods in the single media presentation, and the parental control rating information is sent to the client, so that the client processes the media contents in the single media presentation according to the parental control rating information, so as to make the effect of the parental control accurate.

Referring to FIG. 2, an embodiment of the present invention provides a method for applying parental control in media, where the method includes:
B1: Receive parental control rating information sent by a server, where the parental control rating information is parental control rating information corresponding to media contents in different time periods in the single media presentation.

Reference is made to step A1 for the detailed content of the parental control rating information, and details are not described herein again.

B2: Process the media contents in the single media presentation according to the parental control rating information.

This step is described in detail in A2, and will not be repeated herein.

In this embodiment, the parental control rating information sent by the server is received, where the parental control rating information is parental control rating information corresponding to the media contents in the different time periods in the single media presentation; and the media contents in the single media presentation are processed according to the parental control rating information and a processing rule, so as to make the effect of the parental control accurate.

Referring to FIG. 3, an embodiment of the present invention provides a device for applying parental control in media, where the device for applying parental control in media includes:
a setting unit 301, configured to set parental control rating information for media contents in different time periods in a single media presentation; reference is made to step A1 for the specific implementation process, and details are not described herein again; and
a processing unit 302, configured to send the parental control rating information to a client, so that the client processes the media contents in the single media presentation according to the parental control rating information; reference is made to step A2 for the specific process, and details are not described herein again.

In this embodiment, the setting unit 301 sets the parental control rating information for the media contents in the different time periods in the single media presentation; and the processing unit 302 sends the parental control rating information to the client, so that the client processes the media contents in the single media presentation according to the parental control rating information and a processing rule, so as to make the effect of the parental control accurate.

Referring to FIG. 4, an embodiment of the present invention provides a client, where the client includes:
a receiving unit 401, configured to receive parental control rating information sent by a server, where the parental control rating information is parental control rating information corresponding to media contents in different time periods in the single media presentation; the specific implementation process is described in detail in step B1, which is not repeated herein; and a processing unit 402, configured to process the media contents in the single media presentation according to the parental control rating information; the specific implementation is described in detail in step B2, which is not repeated herein.

In this embodiment, the receiving unit 401 receives the parental control rating information sent by the server, where the parental control rating information is parental control rating information corresponding to the media contents in the different time periods in the single media presentation; and the processing unit 402 processes the media contents in the single media presentation according to the parental control rating information and a processing rule, so as to make the effect of the parental control accurate.

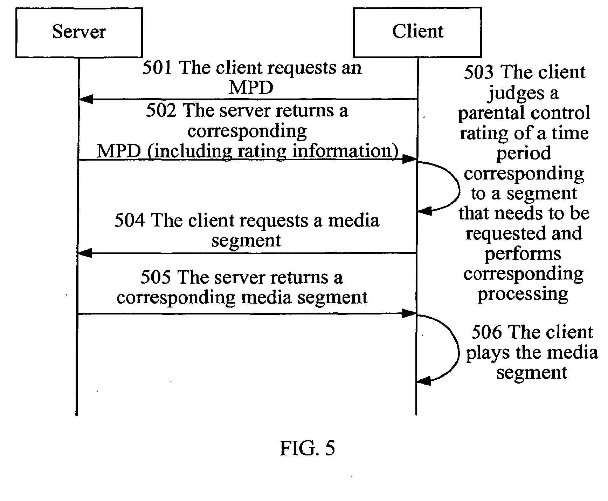

Referring to FIG. 5, an embodiment of the present invention provides a method for applying parental control in media, where a client and a server are included, and specific steps are as follows:
501: The client requests an MPD from the server.

All rating information relevant to parental control may be carried in an MPD layer in a unified manner. This solution is rather suitable for on-demand media presentation or the corresponding included media contents that can be determined in advance, and supports the media presentation that is combined by program contents from different sources or supports inserting a video clip or an advertising segment from other sources into a media presentation. A <ParentalRating> element (CM=Conditionally Mandatory) shown in Table 1 may be used to carry information relevant to a parental control rating.

**Table 1 Element table of the parental control rating information in the MPD layer**

| Name | Layer | Type | Cardinality | Optionality | Relevant Description |
|---|---|---|---|---|---|
| ParentalRating | 1 | E | 0...1 | Optional | Provides all rating information relevant to the parental control |
| defaultRating | 2 | E | | Optional | Default parental control rating information of a media presentation |
| ratingType | | A | | Mandatory | Default parental control rating system (a type defined by the MPEG-7 may be adopted) |
| ratingValue | | A | | Mandatory | Default parental control rating (the whole media presentation) |
| countryCode | 3 | E | 0...N | Optional | Relevant country code (the ISO 3166 standard may be followed) |
| regionCode | 3 | E | 0...N | Optional | Optional; Relevant region code (the ISO 3166-2 standard may be followed) |
| handleMode | 2 | E | | Optional | handle mode that may be adopted when a highest rating of a user or a set highest rating is exceeded; Enumerated values: 0: authentication; 1: skip; and 2: client policy first |
| otherRating | 2 | E | 0...N | Optional | Other rating information (different from the default parental control rating information) |
| ratingValue | | A | | Mandatory | Corresponding parental control rating |
| timeline | 3 | E | 1...N | Mandatory | Time period information corresponding to the parental control rating |
| startTime | | A | | Mandatory | Time offset relative to the starting time of the media presentation |
| duration | | A | | Mandatory | Duration of the time period |

The specific implementation of the parental control rating information is shown as follows, where the bold part is the MPD information.

| |
|---|
| <?xml version="1.0" encoding="UTF-8"?> |
| <MPD |
| type="Live" |
| baseUrl="http://www.example.com" |
| minimumUpdatePeriodMPD="PT20S" |
| minBufferTime="PT 10S" |
| mediaPresentationDuration="PT43M" |
| availabilityStartTime="2010-04-01T09:30:47Z" |
| availabilityEndTime="2010-04-07T09:30:47Z" |
| timeShiftBufferDepth="PT10M" |
| xsi:schemaLocation="urn:3GPP:ns:PSS:AdaptiveHTTPStreamingMPD:2009 |
| 3GPP-MPD-rl.xsd" xmlns:xsi="http://www.w3.org/2001/XMLSchema-instance" |
| xmlns="urn:3GPP:ns:PSS:AdaptiveHTTPStreamingMPD:2009"> |
| <ProgramInformation moreInformationURL="http://www.example.com"> |
| <Title>Example</Title> |
| </ProgramInformation> |
| <ParentalRating> |
| <defaultRating ratingType=" MPAAParentalRatingCS " RatingValue="G"> |
| <countryCode>US</countryCode> |
| </defaultRating> //The MPAAParentalRatingCS rating system is adopted, and a default rating is G |
| //The effective country is America |
| <handleMode>0</handleMode> //The handle mode of the client is authentication |
| <otherRating ratingValue="R"> //Different from a default rating R and a corresponding time period |
| <timeline startTime="PT16M" duration="PT4M"/> |
| </otherRating> |
| <otherRating ratingValue="PG-13 "> //Different from a default rating PR-13 and a corresponding time period |
| <timeline startTime="PT40M" duration="PT3M"/> |
| </otherRating> |
| </ParentalRating> |
| <Period start="PT0S"> |
| <SegmentInfoDefault |
| duration="PT10S" |
| |
| sourceUrlTemplatePeriod="http://example.com/$RepresentationId$/$Index$.3gp"/> |
| <Representation |
| mimeType="video/3gpp; codecs=mp4v.20.9, mp4a.E1" |
| bandwidth="256000"> |
| <SegmentInfo> |
| <UrlTemplate id="1"/> |
| </SegmentInfo> |
| </Representation> |
| <Representation |
| mimeType="video/3gpp; codecs=mp4v.20.9, mp4a.E1" |
| bandwidth=" 128000"> |
| <SegmentInfo> |
| <UrlTemplate id="2"/> |
| </SegmentInfo> |
| </Representation> |
| </Period> |
| <Period start="PT20M"> |
| <Representation |
| mimeType="video/3gpp; codecs=s263, samr" |
| bandwidth="256000"> |
| <SegmentInfo duration="PT10S" baseURL="repl/"> |
| <InitialisationSegmentURL sourceURL="seg-init.3gp"/> |
| <Url sourceURL="seg-1.3gp"/> |
| <Url sourceURL="seg-2.3gp"/> |
| <Url sourceURL="seg-3.3gp"/> |
| ...... |
| <Url sourceURL="seg-36.3gp"/> |
| </SegmentInfo> |
| </Representation> |
| <Representation |
| mimeType="video/3gpp; codecs=mp4v.20.9, mp4a.E1" |
| bandwidth=" 128000"> |
| <SegmentInfo duration="PT10S" baseURL="rep2/"> |
| <InitialisationSegmentURL sourceURL="seg-init.3gp"/> |
| <Url sourceURL="seg-1.3gp"/> |
| <Url sourceURL="seg-2.3gp"/> |
| <Url sourceURL="seg-3.3gp"/> |
| ...... |
| <Url sourceURL="seg-36.3gp"/> |
| </SegmentInfo> |
| </Representation> |
| </Period> |
| <Period start="PT26M"> |
| <SegmentInfoDefault |
| duration="PT10S" |
| sourceUrlTemplatePeriod="http://example.com/$RepresentationId$/$Index$.3gp"/> |
| <Representation |
| mimeType="video/3gpp; codecs=mp4v.20.9, mp4a.E1" |
| bandwidth="256000"> |
| <SegmentInfo> |
| <UrlTemplate id="1"/> |
| </SegmentInfo> |
| </Representation> |
| <Representation |
| mimeType="video/3gpp; codecs=mp4v.20.9, mp4a.E1" |
| bandwidth=" 128000"> |
| <SegmentInfo> |
| <UrlTemplate id="2"/> |
| </SegmentInfo> |
| </Representation> |
| </Period> |
| </MPD> |

502: The server returns a corresponding MPD.

Corresponding parental control rating information may be included in the MPD.

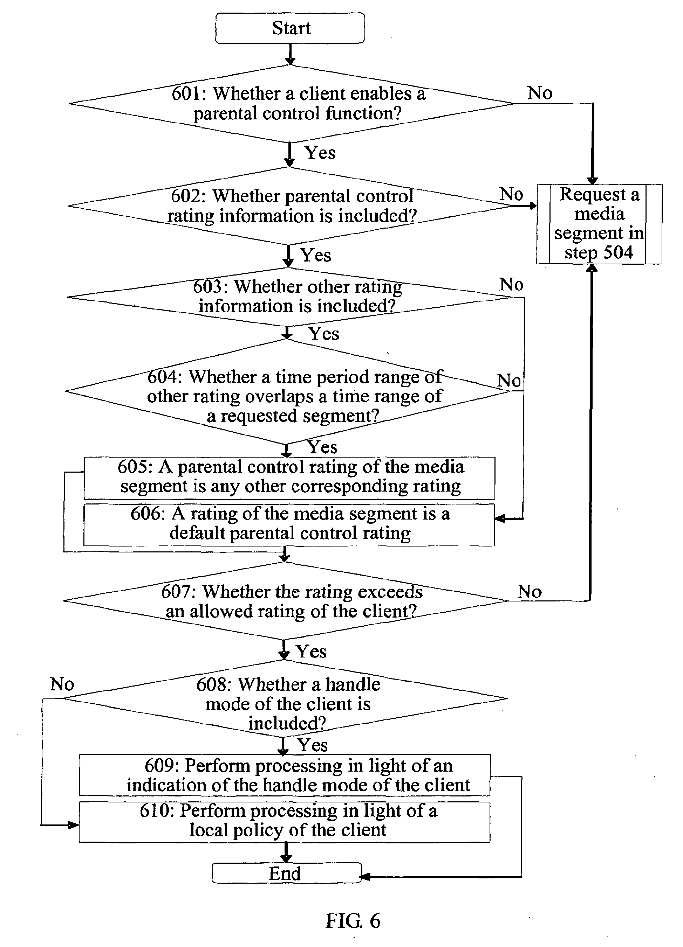

503: The client judges, according to the parental control rating information included in the MPD, a parental control rating of a time period corresponding to a media segment that needs to be requested, and performs corresponding processing. Specific processing steps are shown in FIG. 6:
601: The client judges whether a parental control function is enabled. If the parental control function is not enabled, skip to the processing procedure of step 504 in FIG. 5; otherwise, continue the following processing procedure 602.
602: The client judges whether the parental control rating information is included in the MPD. If the parental control rating information is not included, perform the processing procedure of step 504 in FIG. 5; otherwise, continue to perform the following processing procedure 603. The order of the foregoing 601 and 602 may be exchanged, that is, 602 is performed before 601. The client may also buffer the processing results of 601 and 602 without performing these two steps when requesting each media segment.
603: The client judges whether other rating information is included in the parental control rating information. If other rating information is not included, perform the following processing procedure 606; otherwise, continue to perform the processing procedure 604.
604: The client judges whether a time period range of other parental control rating overlaps a time period range of a requested segment, that is, whether a time period range of a certain <timeline> in an <otherRating> element overlaps a time period range corresponding to the media segment that needs to be requested (supposing that a time period range of a certain <timeline> is [a, b], and the time period range corresponding to the media segment that needs to be requested is [c, d]; if a ≤ c and d ≤ b, it is regarded that a time period range of the <timeline> overlaps the time period range corresponding to the media segment that needs to be requested). If multiple pieces of different parental control rating information exist, each piece of other rating information needs to be processed in sequence until a time period range that overlaps the time period range of the requested segment is found, or a time period range that overlaps the time period range of the requested segment is not found after all processing is finished. If a time period range that overlaps the time period range of the requested segment is found in a certain piece of rating information, continue to perform the following processing procedure 605; otherwise, perform the following processing procedure 606.
605: A parental control rating of the media segment is a corresponding parental control rating in the parental control rating information that includes the time period of the media segment, for example, a ratingValue of an <otherRating> element.
606: A parental control rating of the media segment is a default parental control rating, for example, a ratingValue of a <defaultRating> element.
607: The client judges whether the parental control rating obtained in the foregoing 605 or 606 exceeds a highest rating of the age of a user or a set highest rating of the client. If the parental control rating does not exceed the highest rating, perform the processing procedure of step 504 in FIG. 5; otherwise, continue to perform the following processing procedure 608.
608: The client judges whether a handle mode of the client is included in the parental control rating information, for example, a handleMode in Table 1. If information of the handle mode of the client is included, continue to perform the following processing procedure 609; otherwise, perform the following processing procedure 610.
609: Perform processing in light of an indicated handle mode of the client. If the handle mode is indicated as authentication, the client needs to perform corresponding authentication, if the authentication succeeds, perform the processing procedure of step 504 in FIG. 5, and if the authentication fails, the media segment cannot be requested; if the handle mode is indicated as skip, the media segment that needs to be requested is directly skipped; and if the handle mode is indicated as client policy first, a policy of parental control set by the client prevails, and the following processing procedure 610 needs to be performed.
610: Perform processing in light of a local policy of the client, for example, perform authentication or skip the processing, and for the authentication processing, after the authentication succeeds, perform the processing procedure of step 504 in FIG. 5.

### End the procedure.

504: The client sends a media segment request message to the server.

505: The server returns a media segment corresponding to the media segment request message.

506: The client plays the content of the media segment.

Steps 503 to 506 may be repeated for many times as required.

In this embodiment, the corresponding parental control rating information is set for the media contents in the different time periods in the single media presentation; the parental control rating information is sent to the client, so that the client processes the media contents in the single media presentation according to the parental control rating information, so as to make the effect of the parental control accurate.

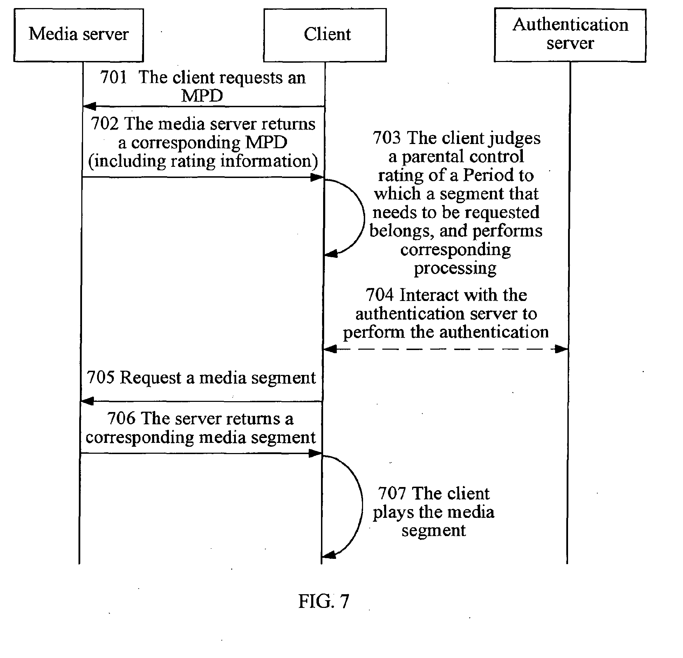

Referring to FIG. 7, an embodiment of the present invention provides a method for applying parental control in media, where a client, a media server, and an authentication server are included, and specific steps are as follows:
701: The client requests an MPD from the server.

Besides that optional default parental control rating information is provided in an MPD layer, for different Periods, when a parental control rating is different from a default parental control rating, other corresponding parental control rating information is added. If the default parental control rating information is not provided, corresponding parental control rating information may be added for each Period. This solution supports providing a live broadcast channel service through adaptive HTTP streaming, or supports dynamically inserting a video clip or an advertising segment from other sources in a live broadcast process. A <ParentalRating> element as shown in the following Table 2 may be included in the MPD layer:

**Table 2 Table of the default parental control rating information included in the MPD layer**

| Name | Layer | Type | Cardinality | Optionality | Relevant Description |
|---|---|---|---|---|---|
| ParentalRating | 1 | E | 0...1 | Optional | Provides all rating information relevant to the parental control |
| defaultRating | 2 | E | | Optional | Default parental control rating information of a media presentation |
| ratingType | | A | | Mandatory | Default parental control rating system (a type defined by the MPEG-7 may be adopted) |
| ratingValue | | A | Mandatory | Mandatory | Default parental control rating (the whole media presentation) |
| countryCode | 3 | E | 0...N | Optional | Relevant country code (the ISO 3166 standard may be followed) |
| regionCode | 3 | E | 0...N | Optional | Optional; Relevant region code (the ISO 316 6-2 standard may be followed) |
| handleMode | 2 | E | | Optional | Operation mode that may be adopted when a highest rating of a user or a set highest rating is exceeded; Enumerated values: 0: authentication; 1: skip; and 2: client policy first |
| AuthServer | | A | | Optional | URL address of a remote authentication server |

In a <Period> element, if a parental control rating of an included media content is different from a default parental control rating, parental control rating information, which is shown in the following Table 3 and functions on the Period, is added:

**Table 3 Table of the parental control rating information that functions on the Period**

| Name | Layer | Type | Cardinality | Optionality | Relevant Description |
|---|---|---|---|---|---|
| Period | 1 | E | 1...N | Mandatory | Provides the information of a Period |
| ...... | | | | | Content included in an original <Period> element |
| otherRating | 2 | E | 0,1 | Optional | Other rating information (different from default parental control rating information) |
| ratingType | | A | | Optional | Different from a system type corresponding to a default parental control rating system |
| ratingValue | | A | | Mandatory | Parental control rating corresponding to the Period |
| countryCode | 3 | E | 0...N | Optional | Relevant country code (the ISO 3166 standard may be followed) |
| regionCode | 3 | E | 0...N | Optional | Optional; Relevant region code (the ISO 316 6-2 standard may be followed) |
| handleMode | 2 | E | | Optional | Operation mode that may be adopted when a highest rating of a user or a set highest rating is exceeded; Enumerated values: 0: authentication; 1: skip; and 2: client policy first |
| AuthServer | | A | | Optional | URL address of a remote authentication server |

If parental control ratings of only a part of time periods in the Period are different from the default parental control rating, corresponding time periods are used to mark the parental control ratings, that is, time period information (timeline) thereof is optional as shown in Table 3:

**Table 4 Table of the parental control rating information that functions on the time period**

| Name | Layer | Type | Cardinality | Optionality | Relevant Description |
|---|---|---|---|---|---|
| Period | 1 | E | 1...N | Mandatory | Provides the information of a Period |
| ...... | | | | | Content included in an original <Period> element |
| otherRating | 2 | E | 0...N | Optional | Other rating information (different from default parental control rating information) |
| ratingType | | A | | Optional | Different from a system type corresponding to a default parental control rating system |
| ratingValue | | A | | Mandatory | Parental control rating corresponding to the Period |
| countryCode | 3 | E | 0...N | Optional | Relevant country code (the ISO 3166 standard may be followed) |
| regionCode | 3 | E | 0...N | Optional | Optional; Relevant region code (the ISO 3166-2 standard may be followed) |
| handleMode | 2 | E | | Optional | Operation mode that may be adopted when a highest rating of a user or a set highest rating is exceeded; Enumerated values: 0: authentication; 1: skip; and 2: client policy first |
| AuthServer | | A | | Optional | URL address of a remote authentication server |
| timeline | 3 | E | 1...N | Optional | Time period information corresponding to the parental control rating |
| startTime | | A | | Mandatory | Time offset relative to the starting time of the Period |
| duration | | A | | Mandatory | Duration of the time period |

If parental control rating information is included in both a <Period> element and a <ParentalRating> element, a parental control rating included in the <Period> has a priority; and if information of a handle mode of the client <handleMode> is included in both the <Period> element and the <ParentalRating> element, similarly, the handle mode included in the <Period> has a priority. If a ratingType, a countryCode, a regionCode, and a handleMode are not included in the <Period>, but the corresponding element or attribute is included in the <ParentalRating> element, then the element or the attribute in the <Period> takes the value of the corresponding element or attribute in the <ParentalRating> element as a default value.

If a media presentation is divided into three different Periods according to the time 0:00-10:00, 10:00-13:00, and 13:00-30:00, parental control ratings of the first and third Periods are a general audiences rating (a G rating in the Motion Picture Association of America rating system), and a parental control rating of the middle Period is a parental counseling rating (a PG rating). An MPD example conforming to the definition of the <ParentalRating> element and the <otherRating> element of the parental control rating information in the foregoing Embodiment 2 is shown by the bold parts in the following:

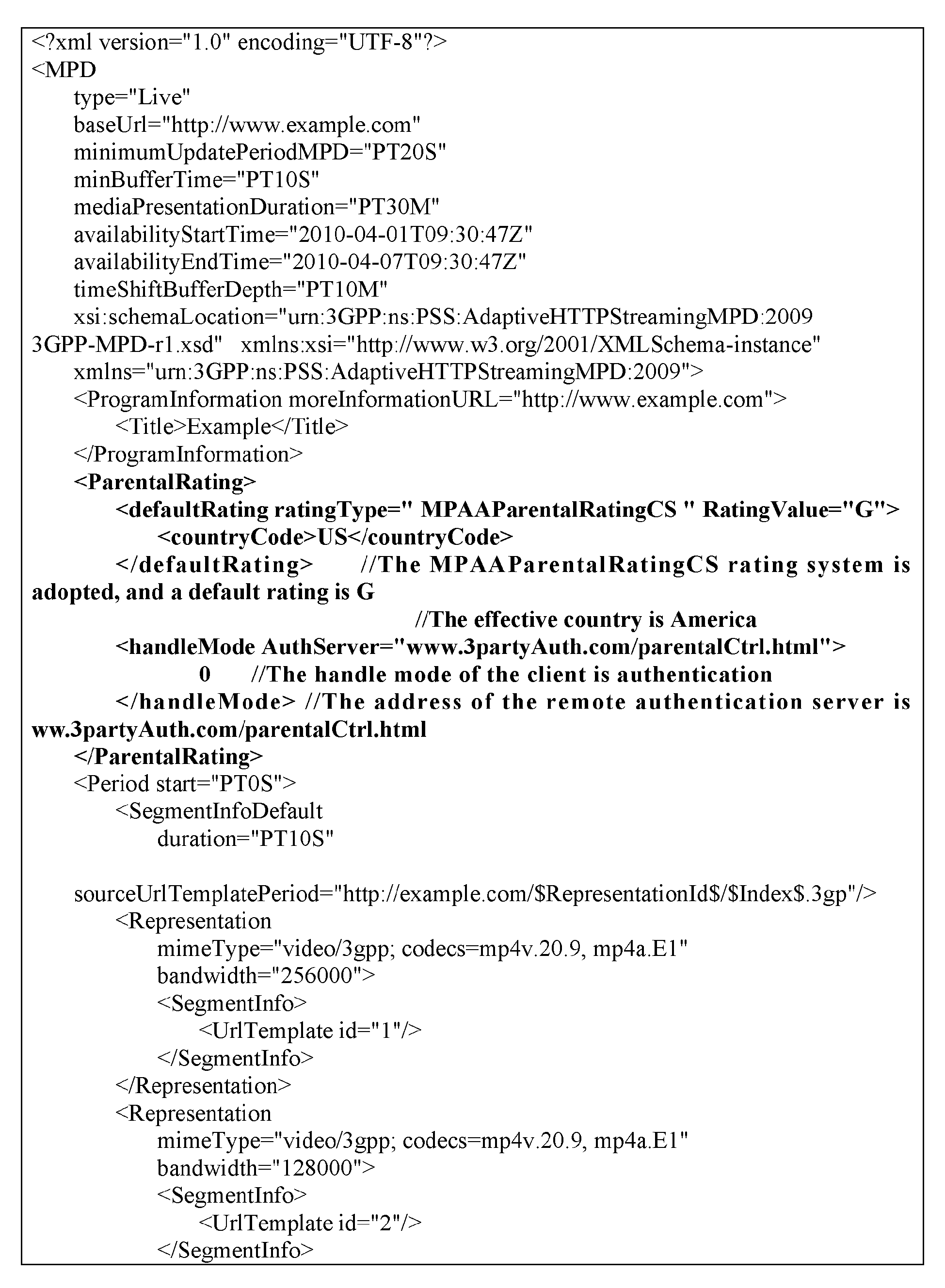

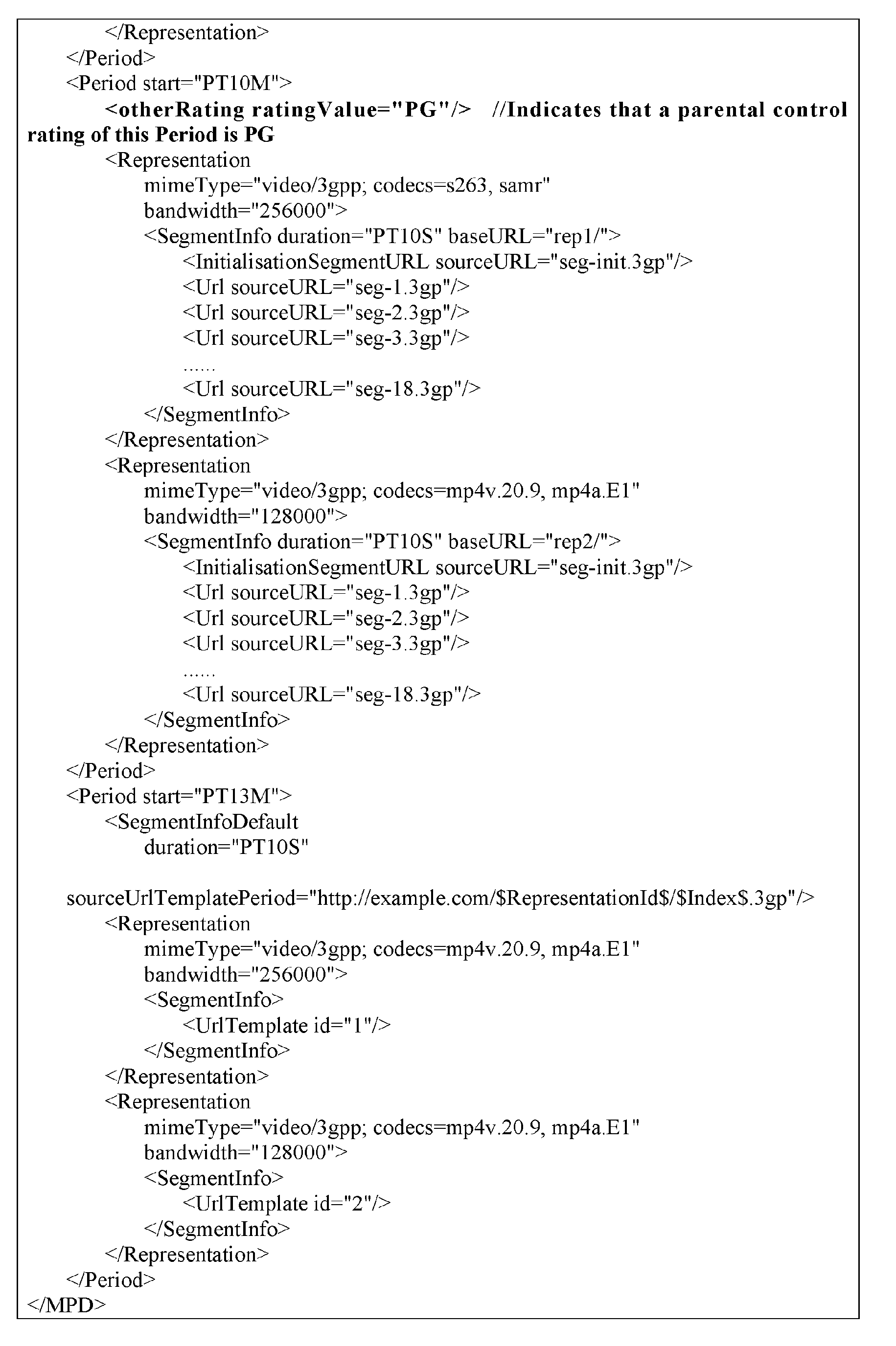

702: The server returns a corresponding MPD.

Parental control rating information may be included in the MPD. Here, the MPD may be a live broadcast MPD, and if the MPD is the live broadcast MPD, steps 701 to 702 may be repeated for many times as required.

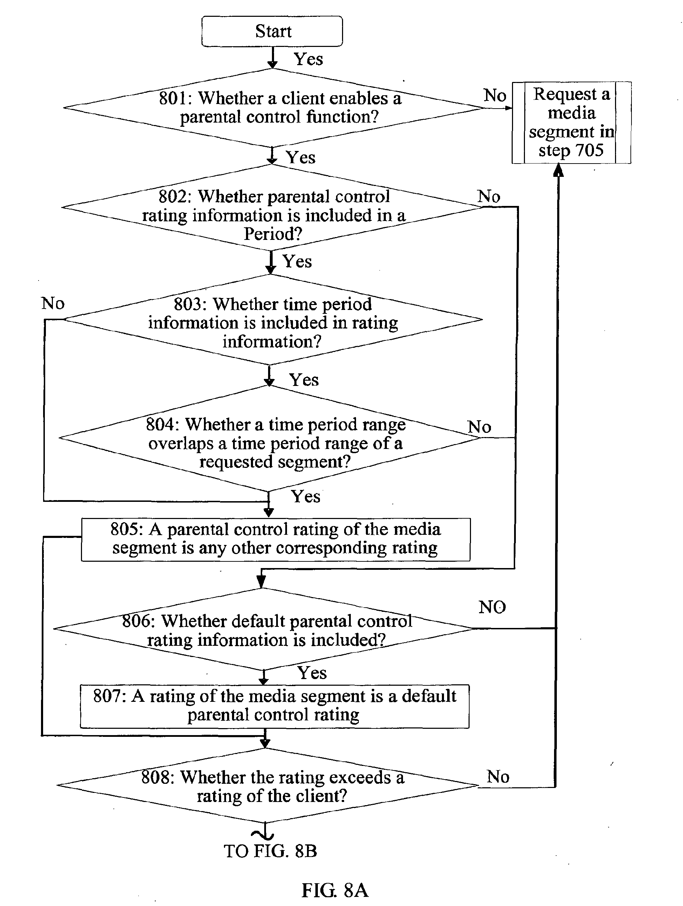

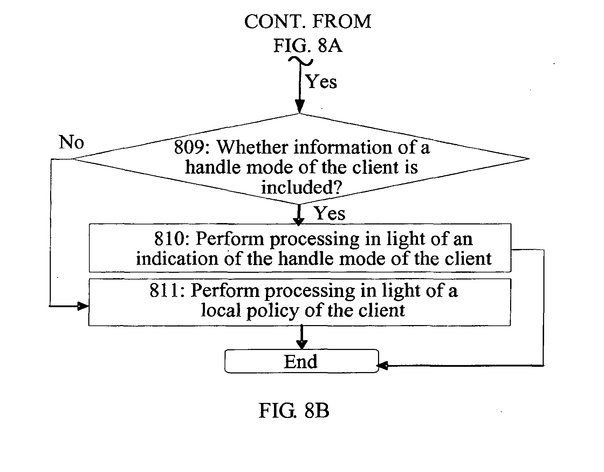

703: The client judges, according to the parental control rating information included in the MPD, a parental control rating of a time period corresponding to a media segment that needs to be requested, and performs corresponding processing. Specific processing steps are shown in FIG. 8:
801: The client judges whether a parental control function is enabled. If the parental control function is not enabled, perform the processing procedure of step 705 in FIG. 7; otherwise, continue to perform the following processing procedure 802.
802: The client judges whether parental control rating information is included in a <Period> element, for example, judges whether an <otherRating> element in Table 3 is included. If the parental control rating information is not included, perform the following processing procedure 806; otherwise, continue the following processing procedure 803.
803: The client judges whether time period information is included in the rating information, for example, judges whether a <timeline> element is included in an <otherRating> element in Table 4. If the time period information is not included, perform the following processing procedure 805; otherwise, continue to perform the following processing procedure 804.
804: The client judges whether a time period range overlaps a time period range of a requested segment, for example, judges whether a time period of in a certain <timeline> element in Table 4 overlaps the time period range corresponding to the media segment that needs to be requested. If multiple pieces of different parental control rating information (multiple <otherRating> elements) exist, each piece of other rating information needs to be processed in sequence until a time period range that overlaps the time period range of the requested segment is found, or a time period range that overlaps the time period range of the requested segment is not found after all processing is finished. If a time period range that overlaps the time period range of the requested segment is found in a certain piece of rating information, continue to perform the following processing procedure 805; otherwise, perform the following processing procedure 806.
805: A parental control rating of the media segment is a corresponding parental control rating in the piece of the rating information that includes the time period of the media segment, for example, a ratingValue of an <otherRating> element, and if the time period information is not included, the parental control rating of the media segment is a ratingValue of an <otherRating> element included in the Period.
806: The client judges whether default parental control rating information of an MPD layer is included in the MPD, for example, judges whether Table 2 includes a <ParentalRating> element. If the default parental control rating information is not included, perform the processing procedure of step 705 in FIG. 7; otherwise, continue to perform the following processing procedure 807.
807: A parental control rating of the media segment is a default parental control rating, for example, a ratingValue of a <defaultRating> element.
808: The client judges whether the parental control rating obtained in the foregoing 805 or 807 exceeds a highest rating of the age of a user or a set highest rating of the client. If the parental control rating does not exceed the highest rating, perform the processing procedure of step 705 in FIG. 7; otherwise, continue to perform the following processing procedure 809.
809: The client judges whether information of a handle mode of the client is included in the MPD, for example, a handleMode attribute of an <otherRating> and/or a <defaultRating> in Embodiment 2. When the parental control rating is a ratingValue in the <otherRating>, if the <otherRating> includes a handleMode, the handle mode is followed in priority, and if an address of a remote authentication server is included in the <otherRating>, remote authentication is applied in priority; otherwise, a handle mode of the client indicated in the <defaultRating> is followed, and if the address of the remote authentication server is included, the remote authentication also needs to be applied. If the information of the handle mode of the client is included, continue to perform the following processing procedure 810; otherwise, perform the following processing procedure 811.
810: Perform processing in light of an indicated handle mode of the client, if the handle mode is indicated as authentication, the client buffers indication information on which authentication needs to be performed, and if a URL address of the remote authentication server is included, the URL address also needs to be buffered so as to be used in step 704 in FIG. 7; if the handle mode is indicated as skip, the media segment that needs to be requested is directly skipped; and if the handle mode is indicated as client policy first, a policy set by the client for the parental control prevails, and the following processing procedure 811 needs to be performed.
811: Perform processing in light of a local policy of the client, for example, perform authentication or directly skip the processing. The client buffers the indication information on which authentication needs to be performed and the URL address of the remote authentication server that may be included, so as to be used in step 704 in FIG. 7.

### 703: End the procedure.

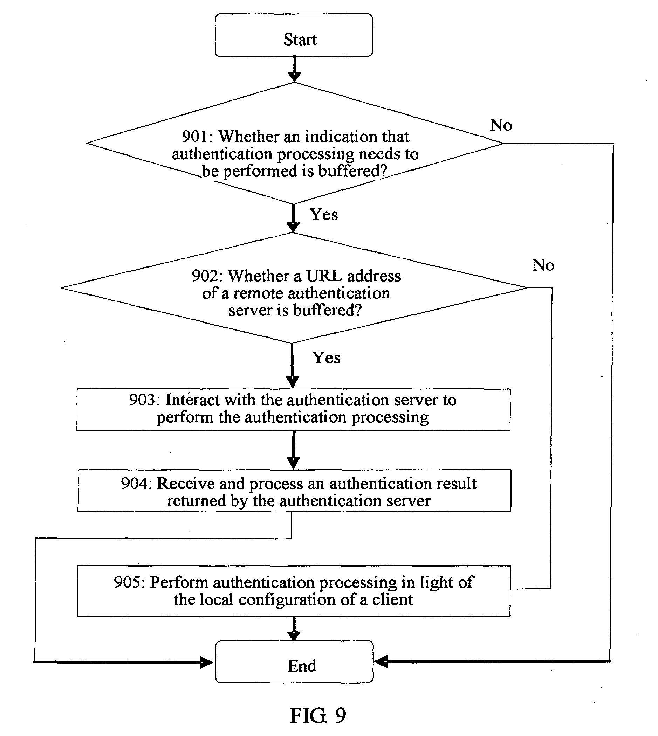

704: An optional step. Interact with an authentication server, and authenticate whether the client can be authorized to watch a media content that exceeds a highest parental control rating allowed. Detailed processing steps of such an embodiment are shown in the following FIG. 9:
901: The client judges whether an indication that authentication processing needs to be performed is buffered, where the indication information is obtained by processing and is buffered in step 703 in FIG. 7. If such indication is buffered, continue to perform the following processing procedure 902; otherwise, end the processing of step 704.
902: The client judges whether a URL address of a remote authentication server is buffered, where the URL address is obtained and is buffered in step 703 in FIG. 7. If the URL address is buffered, continue to perform the following processing procedure 903; otherwise, perform the following processing procedure 905.
903: The client connects to a corresponding authentication server according to the URL address of the remote authentication server, and interacts with the authentication server to perform the authentication. An authentication manner defined by the authentication server may be adopted, for example, submitting a corresponding identity credential, adding a digital signature in a request message, or entering a user name/password in a pop-up window in light of prompts.
904: The client receives an authentication result returned by the authentication server. If the authentication fails, the server returns a result indicating that the authentication fails; and if the authentication succeeds, the server returns a response or token (Token) indicating that the authentication succeeds and indicating a validity period (a period of time such as 30 minutes, or valid for the media presentation period this time, or invalid at next startup or re-login) of the result indicating that the authentication succeeds. If a validity period is set for an authentication result, the foregoing authentication steps 901 to 903 are not necessarily repeated each time, and the authentication is needed again when the authentication result exceeds an assigned validity period. After the authentication succeeds, the processing procedure of step 705 in FIG. 7 is continued; otherwise, the media segment is not requested.
905: Perform authentication processing in light of the local configuration of the client, for example, perform authentication in light of locally pre-set user/password authentication, or perform authentication by inserting a smart card, or perform authentication by adopting a biological feature (such as fingerprint, iris or the like), and return a corresponding authentication result. Similarly, a corresponding validity period may be set for a result indicating that the authentication succeeds. After the authentication succeeds, the processing procedure of step 705 in FIG. 7 is continued.

### 704: End the procedure.

705: The client sends a media segment request message to the server.

706: The server returns a media segment corresponding to the media segment request message.

707: The client plays the content of the media segment.

Steps 703 to 707 may be repeated for many times as required.

In this embodiment, the corresponding parental control rating information is set for the media contents in the different time periods in the single media presentation; the parental control rating information is included in the MPD and then sent to the client, so that the client processes the media contents in the single media presentation according to the parental control rating information, so as to make the effect of the parental control accurate.

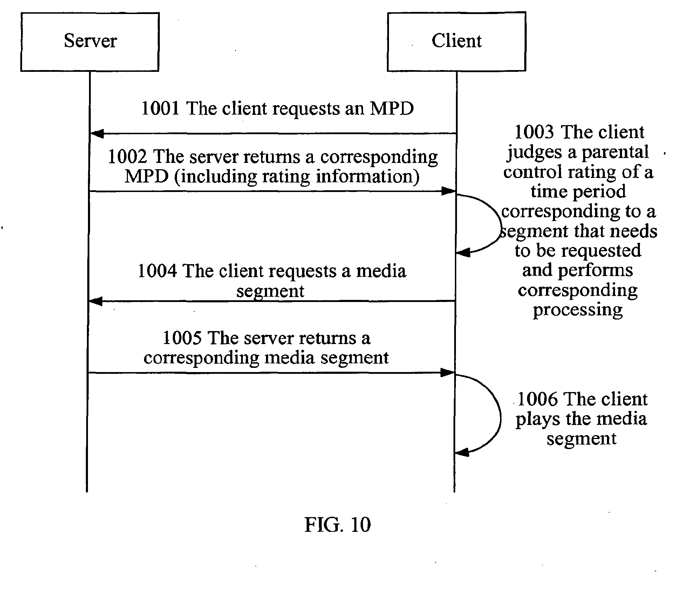

Referring to FIG. 10, an embodiment of the present invention provides a method for applying parental control in media, where a client and a server are included, and specific steps are as follows:
1001: The client requests an MPD from the server.

Besides that optional default parental control rating information is provided in an MPD layer, for different Periods, when a parental control rating is different from a default parental control rating, other corresponding parental control rating information is added. Another implementation solution is that, if parental control ratings of only a part of time periods in a Period are different, a sequence number range of a media segment is used to indicate a media segment corresponding to a parental control rating. A <ParentalRating> element defined in Embodiment 6 may be included in the MPD layer, while in a <Period> element, some attributes may be added in a <SegmentInfoDefault> or <SegmentInfo> element to indicate relevant parental control rating information, and relevant definition is exemplified in the following Table 5:

**Table 5 Table of the parental control rating information**

| Name | Layer | Type | Cardinality | Optionality | Relevant Description |
|---|---|---|---|---|---|
| SegmentInfoDefau It (or *SegmentInfo*) | 2 | E | 0,1 | Optional | Provides default Segment information about Segment durations and, optionally, URL construction. |
| ...... | | | | | Content included in an original <SegmentInfoDefault> or <SegmentInfo> element |
| ratingValue | | A | | Optional | A certain parental control rating value |
| startIndexPR | | A | | CM | Must be included when having a ratingValue: a start serial number of a media segment of this rating |
| endIndexPR | | A | | CM | Must be included when having a ratingValue: an end serial number of a media segment of this rating |

Table 5 only provides a sequence number range, and of course, may also provide multiple sequence number ranges as shown in the following Table 6:

**Table 6 Table of the parental control rating information having multiple sequence numbers**

| Name | Layer | Type | Cardinality | Optionality | Relevant Description |
|---|---|---|---|---|---|
| SegmentInfoDefault (or *SegmentInfo*) | 2 | E | 0,1 | Optional | Provides default Segment information about Segment durations and, optionally, URL construction. |
| ...... | | | | | Content included in an original <SegmentInfoDefault> (or <SegmentInfo>) element |
| ratingValue | | A | | Optional | A certain parental control rating value |
| indexRange | 3 | E | 0...N | CM | Serial number range of a media segment corresponding to the parental control rating |
| startIndexPR | | A | | M | Must be included when having a ratingValue: a start serial number of a media segment of this rating |
| endIndexPR | | A | | M | Must be included when having a ratingValue: an end serial number of a media segment of this rating |

The foregoing two tables only provide a parental control rating and a sequence number range of a media segment corresponding to the parental control rating, and similarly, multiple parental control ratings and sequence number ranges of media segments corresponding to the parental control ratings may be provided as shown in Table 7:

**Table 7 Table of multiple pieces of parental control rating information**

| Name | Layer | Type | Cardinality | Optionality | Relevant Description |
|---|---|---|---|---|---|
| SegmentInfoDefau It (or *SegmentInfo)* | 2 | E | 0,1 | Optional | Provides default Segment information about Segment durations and, optionally, URL construction. |
| ...... | | | | | Content included in an original <SegmentInfoDefault> (or <SegmentInfo>) element |
| otherRating | 3 | E | 0...N | Optional | Other parental control rating information (different from default parental control rating information) |
| ratingValue | | A | | Mandatory | A certain parental control rating value |
| indexRange | 4 | E | 0...N | CM | Serial number range of a media segment corresponding to the parental control rating |
| startIndexPR | | A | | M | Must be included when having a ratingValue: a start serial number of a media segment of this rating |
| endIndexPR | | A | | M | Must be included when having a ratingValue: an end serial number of a media segment of this rating |

For example, when parental control rating information is included in a <SegmentInfoDefault> element, a sequence number (or referred to as serial number/index number) range of a media segment functions on media segments in a sequence number range corresponding to all <Representation> included in a Period that includes the <SegmentInfoDefault>; when parental control rating information is included in a <SegmentInfo> element, a sequence number range of a media segment only functions on media segments in a sequence number range corresponding to a Representation that includes the <SegmentInfo>.

Because the parental control rating information is included in the <SegmentInfo>, a parental control function with finer granularity can be implemented. Because a Representation transmitted by adaptive HTTP streaming may be provided by a content provider or a services provider (Content Provider, CP/Services Provider, SP) as required, for example, not only an audio and a video (even a caption) can be combined in the same Representation as an integrated Representation, but also audios of different languages or code rates, videos of different code rates or view angles, captions of different languages, and so on can be totally separated as independent Representations and then flexibly selected and combined by the client as required. In this way, it is possible to perform independent parental control rating indication for each of different media components (that is, Representations) that compose a media presentation, for example:
(1) corresponding indication may be performed, according to the rating requirements, on a video component that includes scenes such as violence, pornography, and drug taking;
(2) corresponding indication may be performed, according to the rating requirements, on an audio component that includes dirty words;
(3) corresponding indication may be performed, according to the rating requirements, on a caption component that includes dirty words;
(4) when videos having multiple visual angles are provided at the same time, parental control ratings of the videos having different visual angles (or view angles, View Angle) may be different;
(5) when multiple videos (such as a picture in picture PIP or a main video window plus an auxiliary small video window) are provided at the same time, parental control ratings of the different videos may be different; and
(6) when a media component as a supplement is provided, a parental control rating of the media component as the supplement may be different from a parental control rating of a supplemented main media presentation.

In this way, the parental control may be applied to a specific media component (that is, Representation), and the client only selects and plays a Representation that meets a parental control rating requirement.

1002: The server returns a corresponding MPD.

Corresponding parental control rating information may be further included in the MPD.

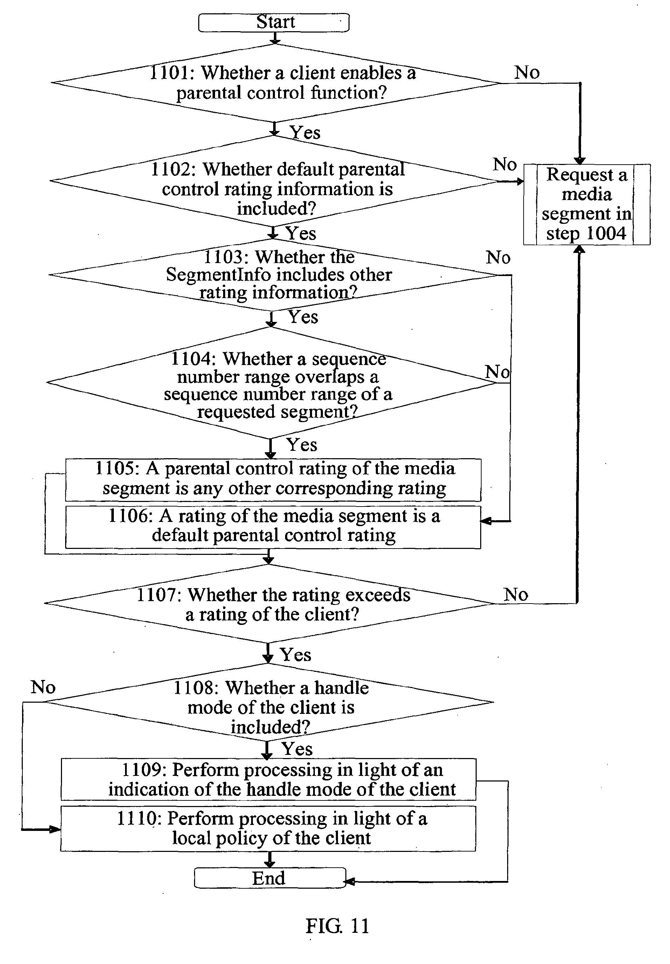

1003: The client judges, according to the parental control rating information included in the MPD, a parental control rating corresponding to a media segment that needs to be requested, and performs corresponding processing. Specific processing steps are shown in FIG. 11:
1101: The client judges whether a parental control function is enabled. If the parental control function is not enabled, perform the processing procedure of step 1004 in FIG. 10; otherwise, continue to perform the following processing procedure 1102.
1102: The client judges whether default parental control rating information of the MPD layer is included in the MPD (judges whether a <ParentalRating> element is included in the MPD). If the default parental control rating information is not included, perform the processing procedure of step 1004 in FIG. 10; otherwise, continue to perform the following processing procedure 1103. The order of the foregoing 1101 and 1102 may be exchanged, that is, 1102 is performed before 1101. The client may also buffer the processing results of 1101 and 1102 without performing these two steps when requesting each media segment.
1103: The client judges whether parental control rating information is included in a <SegmentInfo> of a Representation to which a media segment that needs to be requested belongs. If the parental control rating information is not included, perform the following processing procedure 1106; otherwise, continue to perform the following processing procedure 1104.
1104: The client judges whether a sequence number range of a media segment includes a sequence number of the requested media segment, that is, judges whether a certain sequence number range [startIndexPR, endIndexPR] includes a sequence number of the media segment that needs to be requested (supposing that a sequence number of the media segment that needs to be requested is iReq, and if startIndexPR ≤ iReq ≤ endIndexPR, it is regarded that the sequence number range overlaps the sequence number of the media segment that needs to be requested). If multiple pieces of different parental control rating information exist, each piece of other rating information needs to be processed in sequence until a sequence number range that overlaps the sequence number of the requested segment is found, or a sequence number range that overlaps the sequence number of the requested segment is not found after all processing is finished. If a sequence number range of a media segment that includes the sequence number of the requested segment is found in a certain piece of rating information, continue to perform the following processing procedure 1105; otherwise, perform the following processing procedure 1106.
1105: A parental control rating of the media segment is a corresponding parental control rating (a direct ratingValue or a ratingValue of the <otherRating> element) in the piece of the rating information that includes a sequence number of the media segment.
1106: A parental control rating of the media segment is a default parental control rating (a ratingValue of a <defaultRating> element).
1107: The client judges whether the parental control rating obtained in the foregoing 1105 or 1106 exceeds a highest rating of the age of a user or a set highest rating of the client. If the parental control rating does not exceed the highest rating, perform the processing procedure of step 1004 in FIG. 10; otherwise, continue to perform the following processing procedure 1108.
1108: The client judges whether a handle mode (a handleMode in Table 2) of the client is included in the parental control rating information. If information of the handle mode of the client is included, continue to perform the following processing procedure 1109; otherwise, perform the following processing procedure 1110.
1109: Perform processing in light of an indicated handle mode of the client. If the handle mode is indicated as authentication, the client needs to perform corresponding authentication, if the authentication succeeds, perform the processing procedure of step 1004 in FIG. 10, and if the authentication fails, the media segment cannot be requested; if the handle mode is indicated as skip, the media segment that needs to be requested is directly skipped; and if the handle mode is indicated as client policy first, a policy of the parental control set by the client prevails, and the following processing procedure 1110 needs to be performed.
1110: Perform processing in light of a local policy of the client, for example, perform authentication or skip the processing, and for the authentication processing, after the authentication succeeds, skip to the processing procedure of step 1004 in FIG. 10.

### 1003: End the procedure.

1004: The client sends a media segment request message to the server.

1005: The server returns a media segment corresponding to the media segment request message.

1006: The client plays the content of the media segment.

Steps 1103 to 1106 may be repeated for many times as required.

In this embodiment, the corresponding parental control rating information is set for the media contents in the different time periods in the single media presentation; the parental control rating information is included in the MPD and then sent to the client, so that the client processes the media contents in the single media presentation according to the parental control rating information. In the foregoing step 1003, the parental control function is performed for each of media segments included in each Representation. In the situation that the authentication fails or the handle mode is skip, a media segment of a media component that does not meet a parental control rating requirement is prevented from being played, but other media components that meet parental control rating requirements can still be played: (1) for example, occurrence of a video picture that exceeds the allowed highest rating is prevented, but an audio and/or a caption in a corresponding time period can still be played; (2) or dirty words or a caption or the like that exceed the allowed highest rating are prevented, but a video content and the like in a corresponding time period can still be played; (3) when a parental control rating of a media component provided as a supplement is different from a parental control rating of a supplemented main media presentation, for example, when a video advertisement provided in a picture in picture form exceeds the allowed highest rating, the main media presentation can still be played; and (4) when a video having multiple visual angles is provided, whether to meet a parental control rating requirement serves as a consideration for view angle selection, and a media segment included in a video Representation having a corresponding view angle, which meets the parental control rating requirement, is played.

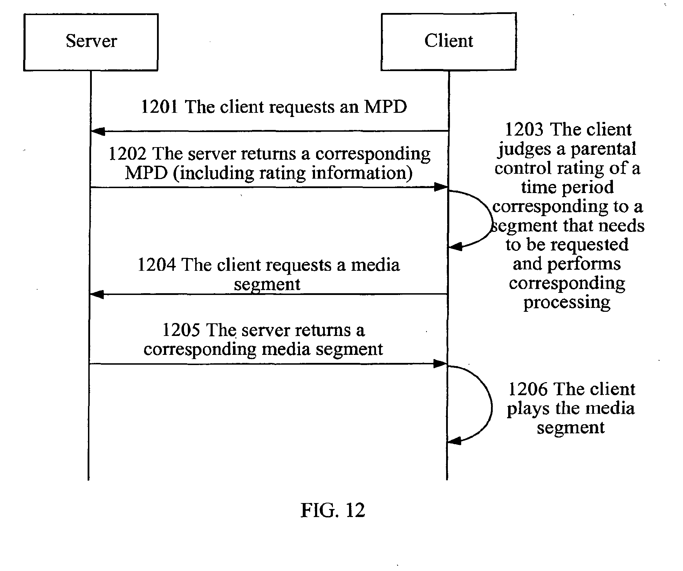

Referring to FIG. 12, an embodiment of the present invention provides a method for applying parental control in media, where a client and a server are included, and specific steps are as follows:
1201: The client requests an MPD from the server.

Because media streaming in an adaptive HTTP streaming transmission technology is sequentially composed in a time order by a series of media segments whose durations are in seconds, other parental control rating information different from a default parental control rating may be directly associated with a corresponding media segment.

Optionally, a <ParentalRating> element that is the same as that in the foregoing Embodiment 6/7 may be included in an MPD layer.

If a parental control rating is different from the default parental control rating, a corresponding parental control rating is added in a URL (<Url>) element of the media segment.

A table of an extended URL element (<Url>) of a media segment is shown by bold parts in Table 8:

**Table 8 Table of an extended URL element of a media segment**

| Name | Layer | type | Cardinality | Optionality | Relevant Description |
|---|---|---|---|---|---|
| Url | 4 | E | 0...N | CM | Provides a set of explicit URL(s) |
| | | | | Must be present if the UrlTemplate element is not present. | for Segments. Note: The URL element may contain a byte range. |
| sourceURL | | A | A Mandatory | Mandatory | The source string providing the URL |
| range | | A | | Optional | The byte range restricting the above URL. If not present, the resources referenced in the sourceURL are unrestricted. The format of the string shall comply with the format as specified in section 12.2.4.1. |
| **ratingValue** | | **A** | | **Optional** | **Parental control rating of the media segment** |

### 1202: The server returns a corresponding MPD.

Corresponding parental control rating information may be further included in the MPD.

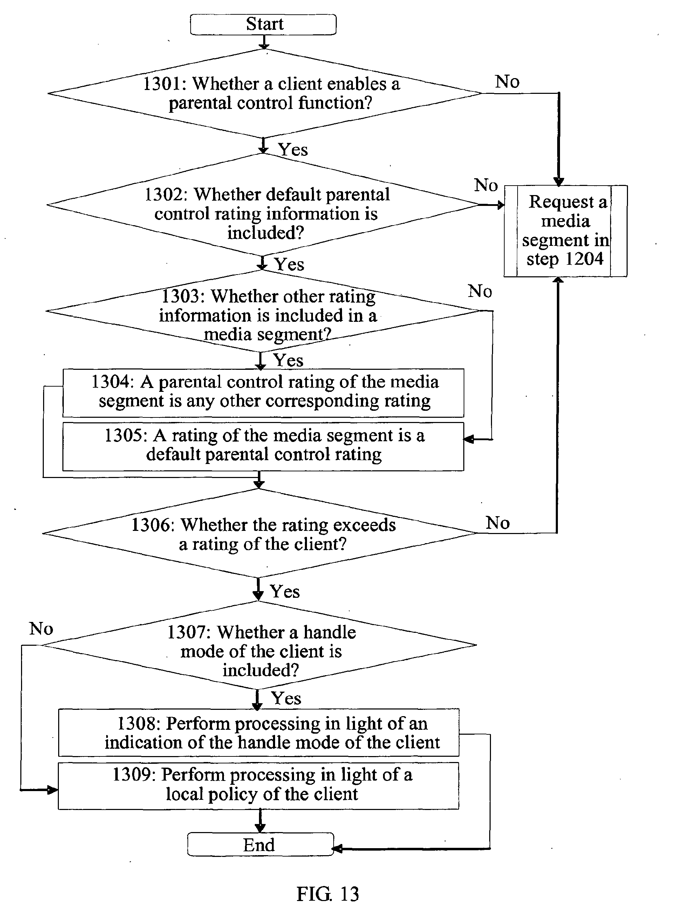

1203: The client judges, according to the parental control rating information included in the MPD, a parental control rating corresponding to a media segment that needs to be requested, and performs corresponding processing. Specific processing steps are shown in FIG. 13:
1301: The client judges whether a parental control function is enabled. If the parental control function is not enabled, perform the processing procedure of step 1204 in FIG. 12; otherwise, continue to perform the following processing procedure 1302.
1302: The client judges whether default parental control rating information of an MPD layer is included in the MPD (judges whether a <ParentalRating> element is included in the MPD). If the default parental control rating information is not included, skip to the processing procedure of step 1204 in FIG. 12; otherwise, continue the following processing procedure 1303. The order of the foregoing 1301 and 1302 may be exchanged, that is, 1302 is performed before 1301. The client may also buffer the processing results of 1301 and 1302 without performing these two steps when requesting each media segment.
1303: The client judges whether parental control rating information is included (whether a ratingValue defined in Table 8 is included) in a <Url> element corresponding to a media segment that needs to be requested. If the parental control rating information is not included, perform the following processing procedure 1305; otherwise, continue to perform the following processing procedure 1304.
1304: A parental control rating of the media segment is any other corresponding parental control rating indicated by the ratingValue.
1305: A parental control rating of the media segment is a default parental control rating (a ratingValue of a <defaultRating> element).
1306: The client judges whether the parental control rating obtained in the foregoing 1304 or 1305 exceeds a highest rating of the age of a user or a set highest rating of the client. If the parental control rating does not exceed the highest rating, perform the processing procedure of step 1204 in FIG. 12; otherwise, continue to perform the following processing procedure 1307.
1307: The client judges whether a handle mode (a handleMode in Table 2) of the client is included in the parental control rating information. If information of the handle mode of the client is included, continue to perform the following processing procedure 1308; otherwise, perform the following processing procedure 1309.
1308: Perform processing in light of an indicated handle mode of the client. If the handle mode is indicated as authentication, the client needs to perform corresponding authentication, if the authentication succeeds, perform the processing procedure of step 1204 in FIG. 12, and if the authentication fails, the media segment cannot be requested; if the handle mode is indicated as skip, the media segment that needs to be requested is directly skipped; and if the handle mode is indicated as client policy first, a policy of the parental control set by the client prevails, and the following processing procedure 1309 needs to be performed.
1309: Perform processing in light of a local policy of the client, for example, perform authentication or skip the processing, and for the authentication processing, after the authentication succeeds, skip to the processing procedure of step 1204 in FIG. 12.

### 1203: End the procedure.

1204: The client sends a media segment request message to the server.

1205: The server returns a media segment corresponding to the media segment request message.

1206: The client plays the content of the media segment.

Steps 1203 to 1206 may be repeated for many times as required.

In this embodiment, the corresponding parental control rating information is set for the media contents in the different time periods in the single media presentation; the parental control rating information is included in the MPD and then sent to the client, so that the client processes the media contents in the single media presentation according to the parental control rating information, so as to make the effect of the parental control accurate.

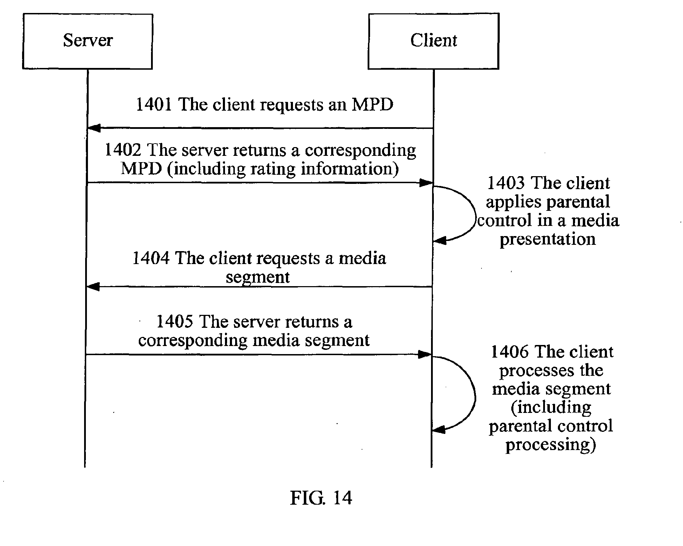

Referring to FIG. 14, an embodiment of the present invention provides a method for applying parental control in media, where a client and a server are included, parental control rating information corresponding to a current media segment is carried in the media segment, and specific steps are as follows:
1401: The client requests an MPD from the server.
1402: The server returns a corresponding MPD.

Default parental control rating information may be further included in the MPD.

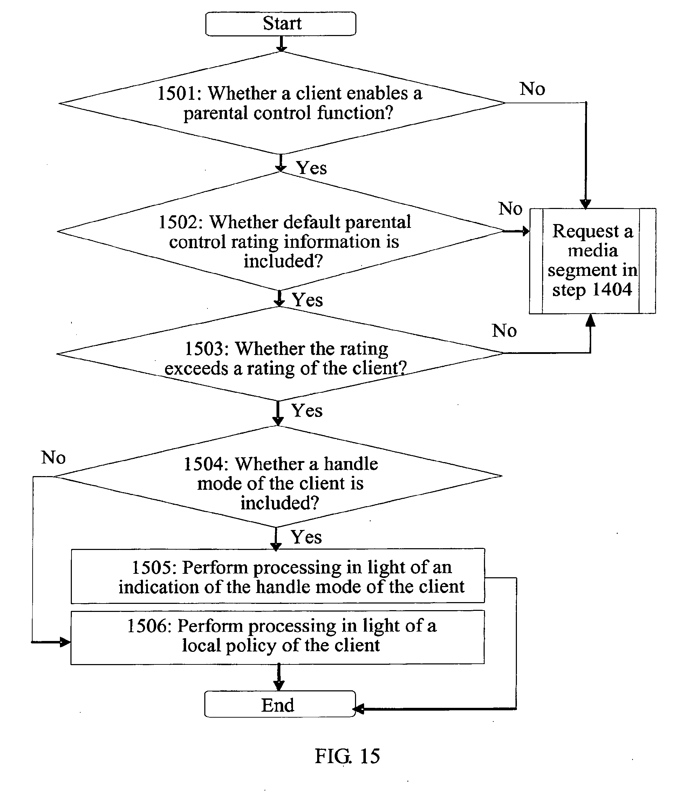

1403: The client processes the MPD, and processes a whole media presentation by applying parental control if the default parental control rating information is included. Detailed processing steps of such an embodiment are shown in the following FIG. 15:
1501: The client judges whether a parental control function is enabled. If the parental control function is not enabled, perform the processing procedure of step 1404 in FIG. 14; otherwise, continue to perform the following processing procedure 1502.
1502: The client judges whether default parental control rating information of an MPD layer is included in the requested MPD. If the default parental control rating information is not included, perform the processing procedure of step 1404 in FIG. 14; otherwise, continue to perform the following processing procedure 1503.
1503: The client judges whether a default parental control rating of the media presentation exceeds a highest rating of the age of a user or a set highest rating of the client. If the parental control rating does not exceed the highest rating, perform the processing procedure of step 1404 in FIG. 14; otherwise, continue to perform the following processing procedure 1504.
1504: The client judges whether a handle mode of the client is included in the parental control rating information. If information of the handle mode of the client is included, continue to perform the following processing procedure 1505; otherwise, perform the following processing procedure 1506.
1505: Perform processing in light of an indicated handle mode of the client. If the handle mode is indicated as authentication, the client needs to perform corresponding authentication, if the authentication succeeds, perform the processing procedure of step 1404 in FIG. 14, and if the authentication fails, the media presentation is prohibited from being played; if the handle mode is indicated as skip, the media presentation is directly skipped and is not played; and if the handle mode is indicated as client policy first, a policy of the parental control set by the client prevails, and the following processing procedure 1506 needs to be performed.
1506: Perform processing in light of a local policy of the client, for example, perform authentication or skip the processing, and for the authentication processing, after the authentication succeeds, perform the processing procedure of step 1404 in FIG. 14, and if the authentication fails, the media presentation is prohibited from being played.

### 1403: End the procedure.

1404: The client sends a media segment request message to the server.

1405: The server returns a media segment corresponding to the media segment request message.

Parental control rating information corresponding to a current media segment is carried in the media segment, and reference is made to ISO/IEC 14496-12. An example that a self-defined Box is used to encapsulate the parental control rating information is described as follows:

```
         aligned(8) class ProtectionSystemSpecificHeaderBox extends FullBox('uuid',
                    extended_type= a certain defined 16-byte uuid value, version=0, flags=0)
         {
           unsigned int(8) rating_type;
           unsigned int(8) rating_value;
           unsigned int(8) handleMode;
           unsigned int(8) country_code_number;
           int i;
           for (i = 0; i < country_code_number; i++) {
              unsigned int(16) country_code;
           }
         }
```

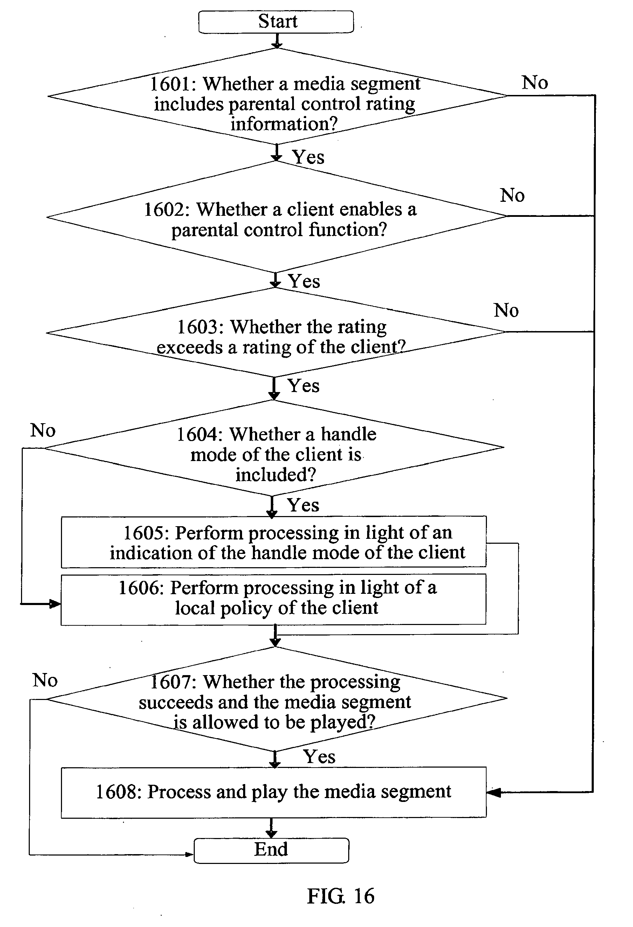

1406: The client processes the media segment (including parental control processing). Detailed processing steps of such an embodiment are shown in the following FIG. 16:
1601: The client judges whether parental control rating information is included in a media segment. If the parental control rating information is not included, perform the following processing procedure 1608; otherwise, continue to perform the following processing procedure 1602.
1602: The client judges whether a parental control function is enabled. If the parental control function is not enabled, perform the following processing procedure 1608; otherwise, continue to perform the following processing procedure 1603. The order of the foregoing 1601 and 1602 may be exchanged, that is, 1602 is performed before 1601.
1603: The client judges whether a parental control rating included in the media segment exceeds a highest rating of the age of a user or a set highest rating of the client. If the parental control rating does not exceed the highest rating, perform the following processing procedure 1608; otherwise, continue to perform the following processing procedure 1604.
1604: The client judges whether a handle mode of the client is included in parental control rating information (including the parental control rating information included in the media segment, and default parental control information that may be included in the MPD). If information of the handle mode of the client is included, continue to perform the following processing procedure 1605; otherwise, perform the following processing procedure 1606.
1605: Perform processing in light of an indicated handle mode of the client. If the handle mode is indicated as authentication, the client needs to perform corresponding authentication; if the handle mode is indicated as skip, the media segment is directly skipped and is not played; and if the handle mode is indicated as client policy first, a policy of the parental control set by the client prevails, and the following processing procedure 1606 needs to be performed; otherwise, perform1607 after performing 1605.
1606: Perform processing in light of a local policy of the client, for example, perform authentication or skip the processing.
1607: The client judges whether the processing succeeds, only when the handle mode of the client is indicated as authentication and the authentication succeeds or the handle mode of the client is indicated as client policy first and the local authentication processing of the client succeeds, the following processing procedure 1608 is continued; otherwise, the processing is ended (the media segment is not processed and played).
1608: The client processes and plays the media segment.

### 1406: End the procedure.

Steps 1404 to 1406 may be repeated for many times as required.

In this embodiment, the corresponding parental control rating information is set for the media contents in the different time periods in the single media presentation; the parental control rating information is included in the MPD and the media segment, and then sent to the client, so that the client processes the media contents in the single media presentation according to the parental control rating information, so as to make the effect of the parental control accurate.

To sum up, parental control rating information may be included in any one or any layer combination of the following:
directly included in an MPD layer, where the effective range of the parental control rating information is the whole media presentation;
or, included in a Period, where the effective range of the parental control rating information is the Period;
or, included in a Representation, where the effective range of the parental control rating information is the Representation;
or, included in a URL element obtained by a media segment, where the effective range of the parental control rating information is the corresponding media segment;
or, included in a media segment, where the effective range of the parental control rating information is the media segment.

The effective range of a parental control rating may be marked or limited in any one of the following manners:
marked through time period range information; marked by directly associating with a Period; marked through a sequence number range of a media segment; marked by directly associating with a URL element obtained by a corresponding media segment; and marked by directly associating with a media segment.

The effective range specifically includes:
the rating has a highest priority if a parental control rating is included in a URL element obtained by a media segment or in the media segment; the rating has a second priority if the parental control rating is included in a Representation; the rating has a third priority if the parental control rating is included in a Period; and finally, the rating has a lowest priority if the parental control rating is included in an MPD layer, that is, a priority order descends from a media segment, a Representation, a Period, to a whole media presentation in a manner.

If parental control information is not included in a certain layer, default parental control information is parental control information included in an upper layer closest to the layer.

In the implementation, the MPD layer may provide one or more pieces of different parental control rating information at the same time; different parental control rating information may be included in different Periods; different parental control rating information may be included in different Representations; and different parental control rating information may be included in URL elements obtained by different media segments or in the media segments.

The parental control may be specifically applied in the following situations: different parental control ratings are applied to a video clip or an advertising segment that is inserted to a media presentation; different parental control ratings are applied to different parts of a composite media presentation having different content sources; and independent and different parental control ratings are applied to different media components (that is, Representations), respectively.

Through the description of the foregoing embodiments, persons of ordinary skill in the art should understand that, all or a part of the steps of the method according to the foregoing embodiments may be implemented by a program instructing relevant hardware. The program may be stored in a computer readable storage medium. When the program is run, the steps of the method according to the foregoing embodiments are performed. The storage medium may be a ROM/RAM, a magnetic disk, an optical disk, and the like.

The foregoing description is merely about exemplary embodiments of the present invention, but not intended to limit the present invention.

## Claims

1. A method for applying parental control in an adaptive HTTP streaming transmission technology, comprising:
setting (A1) corresponding parental control rating information for media contents in different time periods in a single media presentation; and
sending (A2) the parental control rating information to a client, where, the parental control rating
information is comprised in a media presentation description, MPD, so that the client processes the media contents in the single media presentation according to the parental control rating information;
wherein, the step of setting the corresponding parental control rating information for the media contents in the different time periods in the single media presentation comprises: for the single media presentation composed by multiple different media components, setting corresponding parental control rating information for each of the different media components in a same time period.

2. The method according to claim 1, wherein the time period is one of the following:
information of a specific time period range; a whole time period; a time period corresponding to a media segment range; and a time period corresponding to a specific media segment.

3. The method according to claim 1, wherein that the parental control rating information is comprised in a media presentation description and/or media segment is in at least one of the following situations:
the parental control rating information is comprised in an MPD layer, and an effective range of the parental control rating information is the whole media presentation; the parental control rating information is comprised in a Period, and an effective range of the parental control rating information is the Period; the parental control rating information is comprised in a Representation, and an effective range of the parental control rating information is the Representation; the parental control rating information is comprised in a URL element obtained by a media segment, and an effective range of the parental control rating information is the corresponding media segment; the parental control rating information is comprised in a media segment, and an effective range of the parental control rating information is the media segment.

4. The method according to claim 3, wherein a priority of the effective range is described as follows:
the priority is the highest if the parental control rating information is comprised in the URL element obtained by the media segment or in the media segment; the priority is the second highest if the parental control rating information is comprised in the Representation; the priority is the third highest if the parental control rating information is comprised in the Period; the priority is the lowest if the parental control rating information is comprised in the MPD layer.

5. The method according to claim 3, wherein:
if the parental control rating information is not comprised in a certain layer, the parental control rating information is parental control rating information comprised in an upper layer closest to the layer.

6. The method according to claim 1, wherein the MPD further comprises a handle mode of a client, and the handle mode comprises authentication, skip, and client policy first when the parental control rating exceeds a set highest rating or a highest rating of a user; wherein the step of processing the media contents in the single media presentation specifically is:
if a parental control rating exceeds a highest rating of a user or a set highest rating, performing processing by the client according to the handle mode that needs to be adopted;
otherwise, not processing, by the client, as required by the handle mode.

7. A method for applying parental control in an adaptive HTTP streaming transmission technology, comprising:
receiving (B1) parental control rating information sent by a server, wherein the parental control rating information is parental control rating information corresponding to media contents in different time periods in a single media presentation, and the parental control rating information is comprised in a media presentation description, MPD; and for the single media presentation composed by multiple different media components, the parental control rating information is set for each of the different media components in a same time period; and
processing (B2), according to the parental control rating information comprised in the MPD, the media contents in the single media presentation.

8. The method according to claim 7, wherein the MPD further comprises a handle mode of a client, and the handle mode comprises authentication, skip, and client policy first when the parental control rating exceeds a set highest rating or a highest rating of a user, and the step of processing (B2) the media contents in the single media presentation according to the parental control rating information comprises:
if a parental control rating exceeds a highest rating of a user or a set highest rating, performing processing by the client according to the handle mode that needs to be adopted;
otherwise, not processing, by the client, as required by the handle mode.

9. A device for applying parental control in media, comprising:
a setting unit (301), configured to set corresponding parental control rating information for media contents in different time periods in a single media presentation; and
a processing unit (302), configured to send the parental control rating information to a client, wherein the parental control rating information is comprised in a media presentation description, MPD, so that the client processes, according to the parental control rating information comprised in the media presentation description, the media contents in the single media presentation;
wherein, the setting the corresponding parental control rating information for the media contents in the different time periods in the single media presentation comprises: for a media presentation composed by multiple different media components, setting corresponding parental control rating information for each of the different media components in a same time period.

10. A client, comprising:
a receiving unit (401), configured to receive parental control rating information sent by a server, wherein the parental control rating information is parental control rating information corresponding to media contents in different time periods in a single media presentation, wherein the parental control rating information is comprised in a media presentation description, MPD; and for the single media presentation composed by multiple different media components, the parental control rating information is set for each of the different media components in a same time period; and
a processing unit (402), configured to process, according to the parental control rating information comprised in the media presentation description, the media contents in the single media presentation.

## Patentansprüche

1. Verfahren zum Anwenden von elterlicher Aufsicht in einer adaptiven HTTP-Streaming-Übertragungstechnologie, umfassend:
Setzen (A1) von entsprechenden Einstufungsinformationen elterlicher Aufsicht für Medieninhalte in verschiedenen Zeiträumen in einer einzelnen Medienpräsentation;
und
Senden (A2) der Einstufungsinformationen elterlicher Aufsicht zu einem Client,
wobei die Einstufungsinformationen elterlicher Aufsicht in einer Medienpräsentationsbeschreibung (media presentation description, MPD) enthalten sind; so dass der Client die Medieninhalte in der einzelnen Medienpräsentation gemäß den Einstufungsinformationen elterlicher Aufsicht verarbeitet;
wobei der Schritt des Setzens der entsprechenden Einstufungsinformationen elterlicher Aufsicht für die Medieninhalte in den verschiedenen Zeiträumen in der einzelnen Medienpräsentation umfasst, für die einzelne Medienpräsentation, die aus mehreren verschiedenen Medienkomponenten zusammengesetzt ist, entsprechende Einstufungsinformationen elterlicher Aufsicht für jede der verschiedenen Medienkomponenten in einem selben Zeitraum zu setzen.

2. Verfahren nach Anspruch 1, wobei der Zeitraum eine der folgenden Alternativen ist:
Informationen eines spezifischen Zeitraumbereichs; ein gesamter Zeitraum; ein Zeitraum, der einem Mediensegmentbereich entspricht; oder ein Zeitraum, der einem spezifischen Mediensegment entspricht.

3. Verfahren nach Anspruch 1, wobei, dass die Einstufungsinformationen elterlicher Aufsicht in einer Medienpräsentationsbeschreibung und/oder einem Mediensegment enthalten sind, in mindestens einer der folgenden Situationen gilt:
die Einstufungsinformationen elterlicher Aufsicht sind in einer MPD-Schicht enthalten, und ein effektiver Bereich der Einstufungsinformationen elterlicher Aufsicht ist die gesamte Medienpräsentation; die Einstufungsinformationen elterlicher Aufsicht sind in einer Periode enthalten und ein effektiver Bereich der Einstufungsinformationen elterlicher Aufsicht ist die Periode; die Einstufungsinformationen elterlicher Aufsicht sind in einer Repräsentation enthalten, und ein effektiver Bereich der Einstufungsinformationen elterlicher Aufsicht ist die Repräsentation; die Einstufungsinformationen elterlicher Aufsicht sind in einem durch ein Mediensegment erhaltenen URL-Element enthalten, und ein effektiver Bereich der Einstufungsinformationen elterlicher Aufsicht ist das entsprechende Mediensegment; die Einstufungsinformationen elterlicher Aufsicht sind in einem Mediensegment enthalten, und ein effektiver Bereich der Einstufungsinformationen elterlicher Aufsicht ist das Mediensegment.

4. Verfahren nach Anspruch 3, wobei eine Priorität des effektiven Bereichs folgendermaßen beschrieben wird:
die Priorität ist die höchste, wenn die Einstufungsinformationen elterlicher Aufsicht in dem durch das Mediensegment erhaltenen URL-Element oder in dem Mediensegment enthalten sind; die Priorität ist die zweithöchste, wenn die Einstufungsinformationen elterlicher Aufsicht in der Repräsentation enthalten sind;
die Priorität ist die dritthöchste, wenn die Einstufungsinformationen elterlicher Aufsicht in der Periode enthalten sind; die Priorität ist am niedrigsten, wenn die Einstufungsinformationen elterlicher Aufsicht in der MPD-Schicht enthalten sind.

5. Verfahren nach Anspruch 3, wobei
wenn die Einstufungsinformationen elterlicher Aufsicht nicht in einer bestimmten Schicht enthalten sind, die Einstufungsinformationen elterlicher Aufsicht Einstufungsinformationen elterlicher Aufsicht sind, die in einer der Schicht nächstliegenden oberen Schicht enthalten sind.

6. Verfahren nach Anspruch 1, wobei die MPD ferner einen Umgangsmodus eines Client umfasst und der Umgangsmodus Authentifikation, Überspringen und Client-Richtlinie zuerst dann umfasst, wenn die Einstufung elterlicher Aufsicht eine gesetzte höchste Einstufung oder eine höchste Einstufung eines Benutzers übersteigt; wobei der Schritt der Verarbeitung der Medieninhalte in der einzelnen Medienpräsentation spezifisch folgendermaßen lautet:
wenn eine Einstufung elterlicher Aufsicht eine höchste Einstufung eines Benutzers oder eine gesetzte höchste Einstufung überschreitet, Durchführen von Verarbeitung durch den Client gemäß dem Umgangsmodus, der verwendet werden muss;
andernfalls keine Verarbeitung durch den Client, wie durch den Umgangsmodus gefordert.

7. Verfahren zum Anwenden elterlicher Aufsicht in einer adaptiven HTTP-Streaming-Übertragungstechnologie, umfassend:
Empfangen (B1) von durch einen Server gesendeten Einstufungsinformationen elterlicher Aufsicht, wobei die Einstufungsinformationen elterlicher Aufsicht Einstufungsinformationen elterlicher Aufsicht sind, die Medieninhalten in verschiedenen Zeiträumen in einer einzelnen Medienpräsentation entsprechen, und
die Einstufungsinformationen elterlicher Aufsicht in einer Medienpräsentationsbeschreibung, MPD, enthalten sind; und für die durch mehrere verschiedene Medienkomponenten zusammengestellte einzelne Medienpräsentation werden die Einstufungsinformationen elterlicher Aufsicht für jede der verschiedenen Medienkomponenten in einem selben Zeitraum gesetzt; und
Verarbeitung (B2) der Medieninhalte in der einzelnen Medienpräsentation gemäß den in der MPD enthaltenen Einstufungsinformationen elterlicher Aufsicht.

8. Verfahren nach Anspruch 7, wobei die MPD ferner einen Umgangsmodus eines Client umfasst und der Umgangsmodus Authentifikation, Überspringen und Client-Richtlinie zuerst dann umfasst, wenn die Einstufung elterlicher Aufsicht eine gesetzte höchste Einstufung oder eine höchste Einstufung eines Benutzers übersteigt; wobei der Schritt des Verarbeitens (B2) der Medieninhalte in der einzelnen Medienpräsentation gemäß den Einstufungsinformationen elterlicher Aufsicht Folgendes umfasst:
wenn eine Einstufung elterlicher Aufsicht eine höchste Einstufung eines Benutzers oder eine gesetzte höchste Einstufung überschreitet, Durchführen von Verarbeitung durch den Client gemäß dem Umgangsmodus, der verwendet werden muss;
andernfalls keine Verarbeitung durch den Client, wie durch den Umgangsmodus gefordert.

9. Vorrichtung zum Anwenden von elterlicher Aufsicht in Medien, umfassend:
eine Setzeinheit (301), ausgelegt zum Setzen von entsprechenden Einstufungsinformationen elterlicher Aufsicht für Medieninhalte in verschiedenen Zeiträumen in einer einzelnen Medienpräsentation; und
eine Verarbeitungseinheit (302), ausgelegt zum Senden der Einstufungsinformationen elterlicher Aufsicht zu einem Client, wobei die Einstufungsinformationen elterlicher Aufsicht in einer Medienpräsentationsbeschreibung, MPD, enthalten sind; so dass der Client die Medieninhalte in der einzelnen Medienpräsentation gemäß den in der Medienpräsentationsbeschreibung enthaltenen Einstufungsinformationen elterlicher Aufsicht verarbeitet;
wobei das Setzen der entsprechenden Einstufungsinformationen elterlicher Aufsicht für die Medieninhalte in den verschiedenen Zeiträumen in der einzelnen Medienpräsentation umfasst, für eine Medienpräsentation, die aus mehreren verschiedenen Medienkomponenten zusammengesetzt ist, entsprechende Einstufungsinformationen elterlicher Aufsicht für jede der verschiedenen Medienkomponenten in einem selben Zeitraum zu setzen.

10. Client, umfassend:
eine Empfangseinheit (401), ausgelegt zum Empfangen von durch einen Server gesendeten Einstufungsinformationen elterlicher Aufsicht, wobei die Einstufungsinformationen elterlicher Aufsicht Einstufungsinformationen elterlicher Aufsicht sind, die Medieninhalten in verschiedenen Zeiträumen in einer einzelnen Medienpräsentation entsprechen, wobei die Einstufungsinformationen elterlicher Aufsicht in einer Medienpräsentationsbeschreibung, MPD, enthalten sind; und für die durch mehrere verschiedene Medienkomponenten zusammengestellte einzelne Medienpräsentation werden die Einstufungsinformationen elterlicher Aufsicht für jede der verschiedenen Medienkomponenten in einem selben Zeitraum gesetzt; und
eine Verarbeitungseinheit (402), ausgelegt zum Verarbeiten der Medieninhalte in der einzelnen Medienpräsentation gemäß der in der Medienpräsentationsbeschreibung enthaltenen Einstufungsinformationen elterlicher Aufsicht.

## Revendications

1. Procédé d'application d'un contrôle parental dans une technologie adaptative de transmission en continu de flux HTTP, comprenant :
l'établissement (A1) d'informations d'évaluation de contrôle parental correspondantes pour des contenus multimédias dans des intervalles de temps différents d'une unique présentation multimédia ; et
l'envoi (A2) des informations d'évaluation de contrôle parental à un client, où les informations d'évaluation de contrôle parental sont comprises dans une description de présentation multimédia, MPD ; de telle sorte que le client traite les contenus multimédias dans la présentation multimédia unique en fonction des informations d'évaluation de contrôle parental,
dans lequel l'étape d'établissement des informations d'évaluation de contrôle parental correspondantes pour les contenus multimédias dans les différents intervalles de temps dans la présentation multimédia unique comprend : l'établissement, pour la présentation multimédia unique composée de multiples composantes différentes multimédia, d'informations d'évaluation de contrôle parental correspondantes pour chacune des différentes composantes multimédias dans un même intervalle de temps.

2. Procédé selon la revendication 1, dans lequel l'intervalle de temps représente l'un de ce qui suit :
des informations d'une plage spécifique d'intervalles de temps ; un intervalle de temps complet ; un intervalle de temps correspondant à une plage de segments multimédias ; et un intervalle de temps correspondant à un segment multimédia spécifique.

3. Procédé selon la revendication 1, dans lequel les informations d'évaluation de contrôle parental sont comprises dans une description de présentation multimédia et/ou un segment multimédia se trouve dans au moins l'une des situations suivantes :
les informations d'évaluation de contrôle parental sont comprises dans une couche de description MPD et une plage effective des informations d'évaluation de contrôle parental est la totalité de la présentation multimédia ; les informations d'évaluation de contrôle parental sont comprises dans un intervalle et une plage effective des informations d'évaluation de contrôle parental est l'intervalle ; les informations d'évaluation de contrôle parental sont comprises dans une représentation et une plage effective des informations d'évaluation de contrôle parental est la représentation ; les informations d'évaluation de contrôle parental sont comprises dans un élément d'adresse URL obtenu par un segment multimédia et une plage effective des informations d'évaluation de contrôle parental est le segment multimédia correspondant ; les informations d'évaluation de contrôle parental sont comprises dans un segment multimédia et une plage effective des informations d'évaluation de contrôle parental est le segment multimédia.

4. Procédé selon la revendication 3, dans lequel une priorité de la plage effective est décrite comme suit :
la priorité est la plus haute si les informations d'évaluation de contrôle parental sont comprises dans l'élément d'adresse URL obtenu par le segment multimédia ou dans le segment multimédia ; la priorité est la plus haute en second si les informations d'évaluation de contrôle parental sont comprises dans la représentation ; la priorité est la plus haute en troisième si les informations d'évaluation de contrôle parental sont comprises dans la période ; la priorité est la plus basse si les informations d'évaluation de contrôle parental sont comprises dans la couche de description MPD.

5. Procédé selon la revendication 3, dans lequel :
si les informations d'évaluation de contrôle parental ne sont pas comprises dans une certaine couche, les informations d'évaluation de contrôle parental sont des informations d'évaluation de contrôle parental comprises dans la couche supérieure la plus proche de la couche.

6. Procédé selon la revendication 1, dans lequel la description MPD comprend en outre un mode de traitement de client et le mode de traitement comprend une authentification, un contournement et une politique de client d'abord lorsque l'évaluation de contrôle parental dépasse une évaluation la plus haute établie ou une évaluation la plus haute d'un utilisateur ; dans lequel l'étape de traitement des contenus multimédias dans la présentation multimédia unique est en particulier :
l'exécution, si l'évaluation de contrôle parental dépasse l'évaluation la plus élevée d'un utilisateur ou l'évaluation la plus élevée établie, d'un traitement par le client en fonction du mode de traitement qui doit être adopté,
sinon, aucun traitement par le client comme demandé par le mode de traitement.

7. Procédé d'application d'un contrôle parental dans une technologie adaptative de transmission en continu de flux HTTP, comprenant :
la réception (B1) d'informations d'évaluation de contrôle parental envoyées par un serveur, les informations d'évaluation de contrôle parental étant des informations d'évaluation de contrôle parental correspondant à des contenus multimédias dans différents intervalles de temps dans une présentation multimédia unique, et les informations d'évaluation de contrôle parental étant comprises dans une description de présentation multimédia, MPD ; et pour la présentation multimédia unique composée de multiples composantes multimédias différentes, les informations d'évaluation de contrôle parental étant établies pour chacune des composantes multimédias différentes dans un même intervalle de temps ; et
le traitement (B2), en fonction des informations d'évaluation de contrôle parental comprises dans la description MPD, des contenus multimédias dans la présentation multimédia unique.

8. Procédé selon la revendication 7, dans lequel la description MPD comprend en outre un mode de traitement de client, et le mode de traitement comprend une authentification, un contournement et une politique de client d'abord lorsque l'évaluation de contrôle parental dépasse l'évaluation la plus élevée établie ou l'évaluation la plus élevée d'un utilisateur, et l'étape de traitement (B2) des contenus multimédias dans la présentation multimédia unique en fonction des informations d'évaluation de contrôle parental comprend :
l'exécution, si l'évaluation de contrôle parental dépasse l'évaluation la plus élevée d'un utilisateur ou l'évaluation la plus élevée établie, d'un traitement par le client en fonction du mode de traitement qui doit être adopté,
sinon, aucun traitement par le client comme demandé par le mode de traitement.

9. Dispositif permettant d'appliquer un contrôle parental dans une application multimédia, comprenant :
une unité de réglage (301), configurée pour établir des informations correspondantes d'évaluation de contrôle parental pour des contenus multimédias dans des intervalles de temps différents dans une présentation multimédia unique ; et
une unité de traitement (302), configurée pour envoyer les informations d'évaluation de contrôle parental à un client, dans lequel les informations d'évaluation de contrôle parental sont comprises dans une description de présentation multimédia, MPD ; de telle sorte que le client traite, en fonction des informations d'évaluation de contrôle parental comprises dans la description de présentation multimédia, les contenus multimédias dans la présentation multimédia unique,
dans lequel l'établissement des informations d'évaluation de contrôle parental correspondantes pour les contenus multimédias dans les différents intervalles de temps dans la présentation multimédia unique comprend : pour une présentation multimédia composée de multiples composantes multimédias différentes,
l'établissement d'informations d'évaluation de contrôle parental correspondantes pour chacune des composantes multimédias différentes dans un même intervalle de temps.

10. Client, comprenant :
une unité de réception (401), configurée pour recevoir des informations d'évaluation de contrôle parental envoyées par un serveur, les informations d'évaluation de contrôle parental étant des informations d'évaluation de contrôle parental correspondant à des contenus multimédias dans différents intervalles de temps dans une présentation multimédia unique, les informations d'évaluation de contrôle parental étant comprises dans une description de présentation multimédia, MPD ; et
pour la présentation multimédia unique composée de multiples composantes multimédias différentes, les informations d'évaluation de contrôle parental sont établies pour chacune des composantes multimédias différentes dans un même intervalle de temps ; et
une unité de traitement (402), configurée pour traiter, en fonction des informations d'évaluation de contrôle parental comprises dans la description de présentation multimédia, les contenus multimédias dans la présentation multimédia unique.
